# EUROPEAN PATENT SPECIFICATION

(11) **EP 4 022 383 B1**
(45) Date of publication and mention of the grant of the patent: **14.08.2024**
(21) Application number: 20765451.8
(22) Date of filing: 24.08.2020
(51) Int. Cl.: G02B 30/28, G02B 30/29, H04N 13/322, H04N 13/359, H04N 13/305, H04N 13/356

(54) **CREATING A 3D MULTIVIEW DISPLAY WITH ELASTIC OPTICAL LAYER BUCKLING**
ERZEUGUNG EINER 3D-MEHRSICHTANZEIGE MIT KNICKEN EINER ELASTISCHEN OPTISCHEN SCHICHT
CRÉATION D'UN AFFICHEUR MULTIVUE 3D À FLAMBAGE DE COUCHE OPTIQUE ÉLASTIQUE

(30) Priority: 30.08.2019 US 201962894417 P
(43) Date of publication of application: 06.07.2022
(73) Proprietor: InterDigital VC Holdings, Inc., Wilmington, DE 19809 (US)
(72) Inventor: MAKINEN, Jukka-Tapani, 90500 Oulu (FI)
(74) Representative: Interdigital
(86) International application number: PCT/US2020/047663
(87) International publication number: WO 2021/041329

(56) References cited:
- EP-A2- 0 146 408
- WO-A1-2018/200417
- US-A1- 2016 306 390
- HEEJIN CHOI ET AL: "Multiple-viewing-zone integral imaging using a dynamic barrier array for three-dimensional displays", OPTICS EXPRESS, vol. 11, no. 8, 21 April 2003 (2003-04-21), US, pages 927, XP055752219, ISSN: 1094-4087, DOI: 10.1364/OE.11.000927

## Description

### BACKGROUND

There are currently numerous different display devices for presenting three-dimensional (3D) images. Some systems use glasses or goggles and other systems may be used without them. In either case, some technologies allow multiple users, and some technologies work only for a single user. Goggleless displays may offer a shared user experience without obstructing structures that, at least to some degree, isolate the viewer from the surrounding real world. With head mounted displays (HMDs), the level of isolation ranges from complete blockage of the natural view, which is a property of virtual reality (VR) systems, to the mildly-obstructing visors or lightguides placed in front of the eyes that allow augmented reality (AR) and mixed reality (MR) user experiences. Many companies developing MR systems are aiming for a user experience in which virtual objects are visually indistinguishable from real objects. Even if this goal is achieved, head mounted devices put the viewer behind a "looking glass" or a "window" that makes the experience feel artificial. One way to present a natural 3D scene is to do so without goggles.

Overall, goggleless 3D display solutions may be more technically challenging than systems with some kind of headgear. Visual information that a person uses enters the human visual perception system through the eye pupils. HMDs are very close to the eyes and may cover a large Field-Of-View (FOV) with much more compact optical constructions than goggleless displays. HMDs may be more efficient in producing light because the "viewing window" is small and confined to a relatively fixed position. Goggleless displays may be physically large to cover a significant portion of the viewer's FOV, and goggleless system may be more expensive to make. Because user position is not fixed to the display device, projected images may be spread over a large angular range to make the picture visible from multiple positions, which may result in wasting much of the emitted light. This issue may be especially challenging with mobile devices that have a very limited battery life and they may be used in environments where the display image contrast is enhanced with high display brightness if the ambient light levels are high.

HMDs also may use much less 3D image data than goggleless devices. A single user may not use more than one stereoscopic viewpoint to the 3D scene because the display system attached to the head moves together with the eyes. In contrast, the user without goggles is free to change position around the 3D display, and the goggleless system provides several different "views" of the same 3D scenery. This issue multiplies the amount of 3D image information that is processed. To ease the burden of heavy data handling with goggleless displays, specialized eye tracking systems may be used to determine the position and line of sight of the user(s). In this case, 3D sub-images may be directed straight towards the pupils and not spread out to the whole surrounding space. By determining the position of the eyes, the "viewing window" size may be greatly reduced. In addition to lowering the amount of data, eye tracking also may be used for reducing power consumption because the light may be emitted towards the eyes only. Use of such eye tracking and projection systems may require more hardware and require more process power, which, e.g., may limit the number of viewers due to the limited performance of the sub-system.

WO 2018/200417 A1 discloses a 3D display apparatus with flexible optical layers. The display apparatus comprises a light-emitting layer disposed within the display apparatus, a collimating microlens array disposed between the light-emitting layer and an outer surface of the display apparatus, the microlens array comprising a plurality of collimating microlenses, a first flexible light bending layer disposed between the light-emitting layer and the outer surface of the display apparatus, and at least one actuator operative to generate a traveling wave in the first flexible light bending layer to generate an oscillation in the orientation of the first flexible light bending layer relative to each of the collimating microlenses.

H. Choi et al.: "Multiple-viewing-zone integral imaging using a dynamic barrier array for three-dimensional displays," OPTICS EXPRESS, Vol. 11 (2003), pp. 927 - 932, discloses a multiple-viewing-zone integral imaging system, which includes a dynamic barrier array that distributes the 3D images to different directions in a time-division-multiplexed manner in order to increase the number of viewing zones.

### SUMMARY

The invention is as set out in the appended independent claims. Advantageous refinements are subject matter of the dependent claims.

A display device according to some embodiment comprises: a bendable light-emitting layer comprising an addressable array of light-emitting elements; and a deformable optical layer having a plurality of lens regions, the deformable optical layer overlaying the light-emitting layer and being bendable along with the light-emitting layer; wherein the deformable optical layer is configured such that optical powers of the lens regions change in response to bending of the optical layer.

In some embodiments, the deformable optical layer is configured such that, while the deformable optical layer is in at least a first curved configuration, the lens regions form a lenticular array of cylindrical lenses.

In some embodiments, the deformable optical layer is configured such that, while the deformable optical layer is substantially flat, the optical powers of the lens regions are substantially zero.

In some embodiments, the display device further includes a plurality of baffles provided between adjacent lens regions, wherein the baffles are more rigid than the deformable optical layer. The baffles may be transparent.

In some embodiments, the display device is operable as a 2D display in a substantially flat configuration and as a 3D display in at least a first curved configuration.

In some embodiments, the display device further comprises control circuitry operative to control the light-emitting elements to display a 2D image or a 3D image according to a selected display mode.

The display device further comprises a sensor operative to determine a degree of bending of at least one of the deformable optical layer and the light-emitting layer, wherein the control circuitry is operative to select a 2D display mode or a 3D display mode based the degree of bending.

In some embodiments, the control circuitry is operative to display an image in a privacy mode while the display device is in at least a second curved configuration.

A method of operating a display device in some embodiments, includes: determining a degree of bending of the display device; selecting a display mode based on the degree of bending, wherein the selection is made from among a group of display modes including at least a 2D display mode and a 3D display mode; and operating the display device according to the selected display mode.

In some embodiments, selecting a display mode comprises selecting the 2D display mode in response to a determination that the display device is in a substantially flat configuration.

In some embodiments, selecting a display mode comprises selecting the 3D display mode in response to a determination that the display device is in a first curved configuration.

In some embodiments, the group of display modes further includes a privacy mode, and selecting a display mode comprises selecting the privacy mode in response to a determination that the display device is in a second curved configuration.

In some embodiments, the display device includes a deformable optical layer having a plurality of lens regions, wherein the deformable optical layer is configured such that optical powers of the lens regions change in response to bending of the optical layer.

In some embodiments, determining a degree of bending of the display device comprises operating a bending sensor.

A 3D multi-view display may be created by bending a flexible 2D display. Ordered buckling of an elastic optical layer under mechanical stress may be used to generate a 3D multi-view display structure from the flexible 2D display structure. An example flexible display with a dense array of small pixels may be coated with an elastic layer of optical material that has a linear array of transparent and more rigid baffles. The frame around the display may enable bending of the device into a curved shape. Bending may inflict mechanical stress to the elastic material and may cause the layer to buckle into an ordered lenticular shape using a baffle array. The lenticular shape collimates light emitted from display pixels into narrow light beams in one direction, enabling rendering of a multi-view 3D image. A display device with such a structure may be switched between a 2D mode with an outer optical layer that is flat and a 3D mode with an outer optical layer that has a lenticular structure. Such a display device enables the use of 2D without loss of resolution.

### BRIEF DESCRIPTION OF THE DRAWINGS

FIG. 1A is a system diagram illustrating an example communications system according to some embodiments.
FIG. 1B is a system diagram illustrating an example wireless transmit/receive unit (WTRU) that may be used within the communications system illustrated in FIG. 1A according to some embodiments.
FIG. 2 is a schematic plan view illustrating an example 9-view autostereoscopic 3D display viewing geometry according to some embodiments.
FIG. 3 is a schematic plan view illustrating an example curved display in a multi-view display viewing geometry according to some embodiments.
FIG. 4 is a schematic plan view illustrating an example 3D display viewing geometry for one viewer according to some embodiments.
FIG. 5 is a schematic plan view illustrating an example 3D display viewing geometry for multiple viewers according to some embodiments.
FIG. 6A is a schematic plan view illustrating an example display in 2D mode according to some embodiments.
FIG. 6B is a schematic plan view illustrating an example display in 3D mode according to some embodiments.
FIG. 7 is a schematic cross-sectional top view illustrating an example set of structural elements of a display device according to some embodiments.
FIG. 8A is a schematic cross-sectional top view illustrating an example display without buckling according to some embodiments.
FIG. 8B is a schematic cross-sectional top view illustrating an example display with buckling according to some embodiments.
FIG. 9A is a schematic cross-sectional top view illustrating an example display with sinusoidal buckling according to some embodiments.
FIG. 9B is a schematic cross-sectional top view illustrating an example display with ordered buckling according to some embodiments.
FIG. 10 is a schematic plan view illustrating an example curved display viewing geometry according to some embodiments.
FIG. 11A is a schematic plan view illustrating a first example display curvature design according to some embodiments.
FIG. 11B is a schematic plan view illustrating a second example display curvature design according to some embodiments.
FIGs. 12A-12B are a schematic front views illustrating a first example of a continuous three-color pixel layout used in 2D and 3D display modes according to some embodiments.
FIGs. 13A-13B are schematic front views illustrating a second example of a continuous three-color pixel layout used in 2D and 3D display modes according to some embodiments.
FIG. 14 is a schematic plan view illustrating an example display system viewing geometry according to some embodiments.
FIG. 15A is a schematic cross-sectional top view illustrating an example display system optical structure according to some embodiments.
FIG. 15B is a schematic front view illustrating an example OLED panel pixel geometry according to some embodiments.
FIG. 16A is a schematic cross-sectional top view illustrating an example optical structure geometry in 2D mode according to some embodiments.
FIG. 16B is a schematic cross-sectional top view illustrating an example optical structure geometry in 3D mode according to some embodiments.
FIG. 17 is a graph showing example spatial irradiance distributions at a viewing window according to some embodiments.
FIG. 18 is a graph showing an example angular radiance distribution at a viewing window according to some embodiments.
FIG. 19 is a message sequencing diagram illustrating an example process for generating a display view according to some embodiments.
FIG. 20 is a flowchart illustrating an example process for operating a display with elastic optical layer buckling according to some embodiments.
FIG. 21 is a flowchart illustrating an example process for operating a display with elastic optical layer buckling according to some embodiments.
FIGs. 22A-22C are functional block diagrams illustrating operation of control circuitry according to some embodiments.

The entities, connections, arrangements, and the like that are depicted in-and described in connection with-the various figures are presented by way of example and not by way of limitation.

### DETAILED DESCRIPTION

A wireless transmit/receive unit (WTRU) may be used, e.g., as a display, a multi-view display, a curved display, a 2D display, a 3D display, and/or a flexible display in some embodiments described herein.

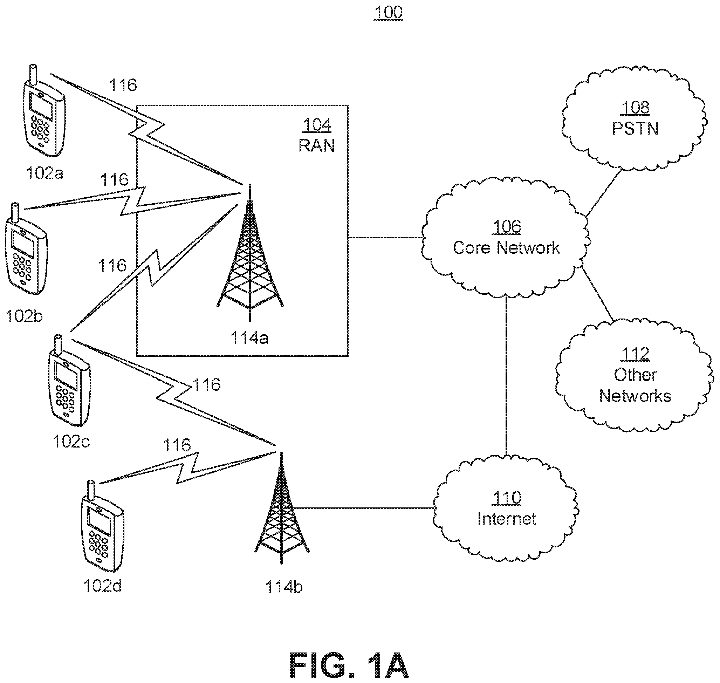

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

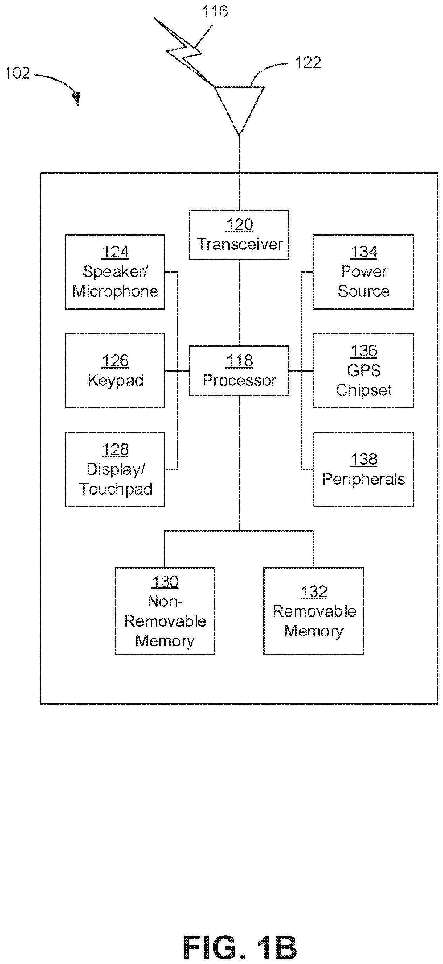

FIG. 1B is a system diagram illustrating an example VIΓΓRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the VIΓΓRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the VIΓΓRU 102. In addition to, or in lieu of, the information from the GPS chipset 136, the VIΓΓRU 102 may receive location information over the air interface 116 from a base station (e.g., base stations 114a, 114b) and/or determine its location based on the timing of the signals being received from two or more nearby base stations. It will be appreciated that the VIΓΓRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

In view of Figures 1A-1B, and the corresponding description of Figures 1A-1B, one or more, or all, of the functions described herein with regard to one or more of: WTRU 102a-d, Base Station 114a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or VIΓΓRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Overview of 3D Display Devices

One known technique for presenting three-dimensional (3D) images is stereoscopy. In this method, two two-dimensional (2D) images are displayed separately to the left and right eye. In goggleless displays, the two views are commonly generated either by using a parallax barrier method (e.g., see U.S. Patent Application No. 2016/0116752) or lenticular sheets (e.g., see U.S. Patent Nos. 6,118,584 and 6,064,424) that are able to limit the visibility of a pair of light emitting pixels in such a way that the pixels are able to be seen only with the designated eye. Perception of depth is created when matrices of these pixel pairs are used to create images taken from slightly different viewing angles and the 3D image is combined in the brain. However, presentation of two 2D images is perceptually not the same thing as displaying an image in full 3D. One difference is the fact that head and eye movements will not give more information about the objects being displayed - the 2D images are able to present only the same two slightly different viewpoints. These types of systems are commonly called 3D displays, although stereoscopic displays would be the more accurate term. 3D displays are stereoscopic because they are able to present the image pairs to the two eyes of the viewer. The use of only two views may cause the 3D image to be "flipped" if the viewer moves to a wrong position in front of the display. Also, the 3D illusion may not occur if the images are not visible to the correct eyes properly and the brain is not able to process the information. In the worst case, the viewer may even feel nauseated, and a prolonged use of a low-quality display may lead to headaches and dizziness.

Multi-view systems are displays that have taken one step forward from common stereoscopic displays. In these devices, light is emitted from a pixelated layer, and a microlens or lenticular sheet collimates the emitted light into a set of beams that exit the lens aperture at different propagation directions. The beam directions create the stereoscopic 3D effect when several unique views of the same 3D image are projected to the different directions by modulating the pixels according to the image content. If only two pixels are used for one 3D scene, the result is a stereoscopic image for a single user standing in the middle of the FOV. If more than two pixels are used under one microlens that defines the boundaries of a multi-view display cell, the result is a set of unique views spread across the FOV, and multiple users may see the stereoscopic images at different positions inside the predefined viewing zone. Each viewer may have his or her own stereoscopic viewpoint to the same 3D content, but perception of a three-dimensional image is generated, enabling a shared visual experience. As the viewers move around the display, the image is changed for each new viewing angle, making the 3D illusion much more robust and convincing for individual viewers, thereby improving the perceived display quality considerably.

With many relatively low-density multi-view displays, the views change in a stepwise fashion as the viewer moves in front of the device. This feature lowers the quality of 3D experience and even may cause a breakup of the 3D perception. In order to mitigate this problem, some Super Multi View (SMV) techniques have been tested with as many as 512 views. An extremely large number of views may be generated, making the transition between two viewpoints very smooth. If the light from at least two images from slightly different viewpoints enters the eye pupil almost simultaneously, a much more realistic visual experience follows, according to journal article Yasuhiro Takaki, *High-Density Directional Display for Generating Natural Three-Dimensional Images,* 94:3 PROCEEDINGS OF THE IEEE (2006). In this case, motion parallax effects resemble the natural conditions better as the brain unconsciously predicts the image change due to motion. The SMV condition may be met by reducing the spatial interval between two views at the correct viewing distance to a value smaller than the size of the eye pupil. Alternatively, two images may be projected to the pupil of a single eye at slightly different points in time but still inside the timeframe of human persistence-of-vision, in which case the images are perceived as continuous.

At nominal illumination conditions the human pupil is generally estimated to be ~4 mm in diameter. If the ambient light levels are high (sunlight), the diameter may be as small as 1.5 mm and in dark conditions as large as 8 mm. The maximum angular density that is able to be achieved with SMV displays is generally limited by diffraction, and there is an inverse relationship between spatial resolution (pixel size) and angular resolution according to journal article A. Maimone, et al., Focus 3D: Compressive Accommodation Display, 32(5) ACM TRANSACTIONS ON GRAPHICS 153:1-153:13 (2013). Diffraction increases the angular spread of a light beam passing through an aperture and this effect may be considered in the design of very high density SMV displays. This may become an issue if very small display pixels are used (e.g., mobile displays) such that the display is placed far away from the viewer. In practice, a high angular view density is very difficult to achieve with only spatial multiplexing, and additional temporal multiplexing may be used. If the high number of views are not generated simultaneously with adequate projected image quality, the SMV condition may be met by designing a component or system that is capable of producing the views sequentially but so fast that the human visual system perceives them as simultaneous.

One potential method to create a multi-view 3D display suitable for a mobile device is by using a directional backlight structure behind an ordinary liquid crystal display (LCD). In this technique, two or more light sources (at least one for each eye's view) are used together with a lightguide. The lightguide has out-coupling structures that project the display back-illumination to two or more different directions according to which light source is used. By alternating the display image content in synchrony with the light sources, a stereoscopic view pair or set of views of the 3D scene may be created.

One problem associated with many backlight systems is he use of relatively slow LCD displays. The backlight module produces a set of directional illumination patterns that go through a single LCD, which is used as a light valve that modulates the images going to different directions. LEDs commonly used as light sources may be modulated much faster than the few hundred cycles per second of which many LCDs are capable. But because all of the directional illumination patterns go through the same display pixels, the display refresh rate becomes the limiting factor for how many flicker-free views may be created. The human eye limit for seeing light intensity modulation is generally set to a value of 60 Hz, but the limit may be calculated. For example, an LCD display may modulate at a frequency of 240 Hz, and only 4 unique views may be generated with the display without inducing eye straining flicker to the image. In general, the same refresh frequency limitation applies to 3D display systems that are based on the use of LCDs.

### 3D Multi- View Display Design Considerations

Functioning of the currently available, flat-panel-type goggleless multi-view displays tend to be generally based on spatial multiplexing only. In the most common integral imaging approach, a row or matrix of light emitting pixels is placed behind a lenticular lens sheet or microlens array, and each pixel is projected to a unique view direction in front of the display structure. The more light emitting pixels there are on the light emitting layer, the more views may be generated. In order to obtain a high-quality 3D image, the angular resolution should be high, generally in the range of at least 1.0° - 1.5° per one view. This may create a problem with stray light because the neighboring views should be adequately separated from each other in order to create a clear stereoscopic image. At the same time, neighboring views may be very closely packed in order to offer high angular resolution and a smooth transition from one view to the next one. Light-emitting sources also have typically quite wide emission patterns, which means that the light will easily spread over more than the aperture of the one lens intended for image projection. The light hitting neighboring lenses may cause secondary images that are projected to wrong directions. If a viewer sees simultaneously one of these secondary views with the other eye and a correct view with the other eye, the perceived image may flip to the wrong orientation, and the 3D image will be severely distorted.

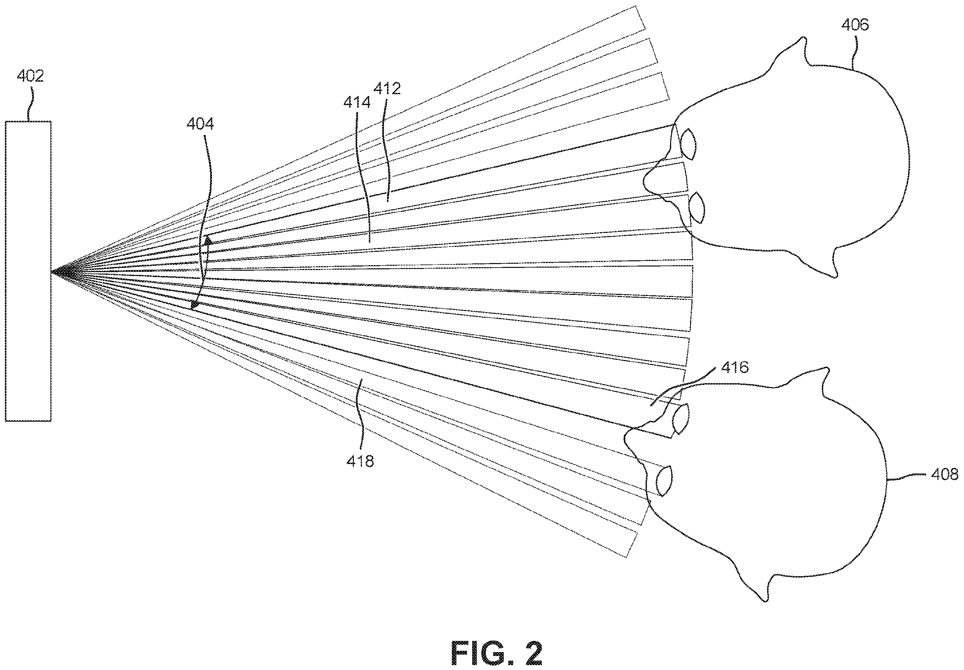

FIG. 2 is a schematic plan view illustrating the viewing geometry of an example 9-view autostereoscopic 3D display 402 according to some embodiments. The separate views are projected to a specific field of view 404, and the cone of projection directions forms a viewing window at certain viewing distance. The viewing window is formed by individual source image projections that are smaller than the distance between viewer eyes (average ~64 mm). For example, a viewer at position 406 sees with the right eye the primary view projected to direction 412 and sees with the left eye the primary view projected to direction 414. As the image content in these two directions is rendered from two different viewpoints, the viewer is able to form a stereoscopic 3D image. Unfortunately, there are also secondary view directions (illustrated with dotted lines), which may be considered as stray light images projected through neighboring lenses in the array. These views may start at the edge of the intended field of view, and these views have the wrong image content with respect to the view direction. This means that if the viewer is at position 408 in the displayed viewing geometry, the right eye sees the correct image projected to direction 416, but the left eye sees the secondary projection of the image that was intended for view direction 412. In such a case, the 3D image is flipped. However, in some cases, this feature may be turned into an advantage because the secondary view direction may be used for projecting the image to the correct eye if the projection angle is better than the angle of the primary view. Such a scenario may be used if the pixel is at the edge of the display and if the projection direction is at a large angle compared to the lens optical axis.

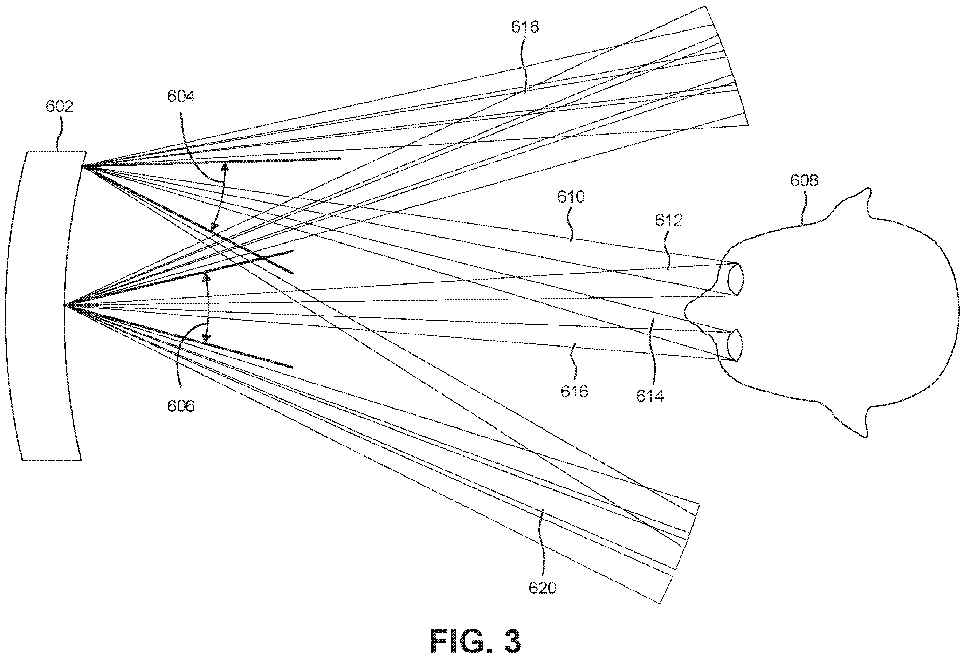

FIG. 3 is a schematic plan view illustrating an example curved display 602 in a multi-view display viewing geometry according to some embodiments. The same view directions from different parts of the display are projected to the same positions at the viewing window because pixel fields of view overlap at the viewer's eyes. If the fields of view do not overlap, some parts of the 3D image may not be formed, or the two eyes may get the wrong images and the 3D image may not be visible. To make directional pixel FOVs 604, 606 overlap at a specified viewing distance, the display 602 may be curved with a certain radius or the projected beam directions may be turned towards a specific point with, e.g., a flat Fresnel lens sheet. A flat display may be used without extra focusing optics, and the positions of the pixels may be shifted towards the display edges. In this case the amount of light projected to secondary view directions may be increased at the same time as the amount of light projected to primary view directions is decreased. This feature may increase the amount of stray light. Some embodiments may account for this light balance shift in the rendering of images. FIG. 3 shows an example where individual display directional pixel FOVs 604, 606 are made to overlap by curving the display surface 602. If the curvature of the display is correct, all the view directions (e.g., including primary directions 4 (610, 612) and 6 (614, 616)) projected from different parts of the display will overlap exactly at the position of the viewer 608, and a coherent 3D image is visible. In this case the secondary stray light views 618, 620 will be projected outside the viewing window.

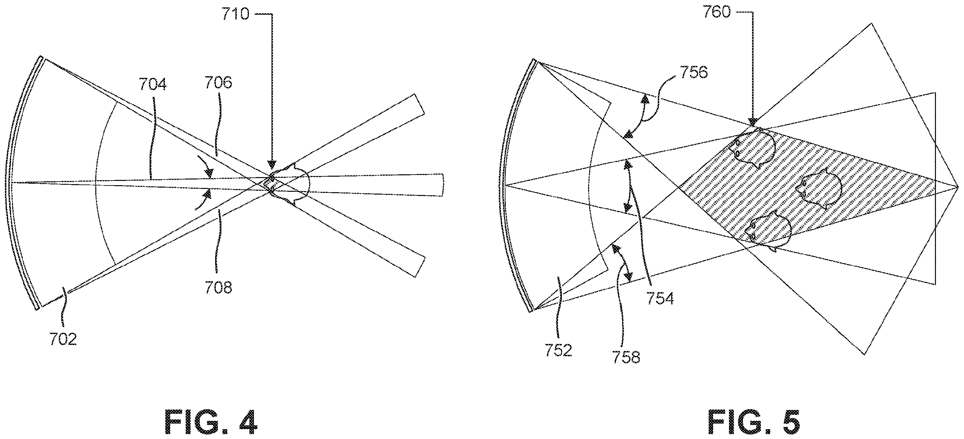

FIG. 4 is a schematic plan view illustrating an example 3D display viewing geometry for a single viewer according to some embodiments. FIG. 5 is a schematic plan view illustrating an example 3D display viewing geometry for multiple viewers according to some embodiments. Overlapping beam bundle FOVs form not only a flat viewing window, but a viewing zone with depth around the facial area of the viewer. The size of this viewing zone determines the amount of movement allowed for the viewer head. Both eye pupils should be inside the zone simultaneously in order to make the stereoscopic image possible. FIGs. 4 and 5 show schematic presentations of two different example viewing geometries for image zones 702, 752. In the first pictured case, FIG. 4, a single viewer is sitting in front of the display and both eye pupils are covered with a small viewing zone 710 achieved with narrow beam bundle FOVs 704, 706, 708. The minimum functional width of the zone is determined by the eye pupil distance (on average ~64 mm). A small width also means a small tolerance for viewing distance changes as the narrow FOVs 704, 706, 708 start to separate from each other very fast both in front of and behind the optimal viewing location. The second case, FIG. 5, presents a viewing geometry where the beam bundle FOVs 754, 756, 758 are quite wide making it possible to have multiple viewers inside the viewing zone 760 and at different viewing distances. In this case also the positional tolerances are large.

The size of the viewing zone may be designed by altering beam bundle fields of view. This process may be done by increasing the width of the light emitter row or by changing the focal length of the beam collimating optics. Smaller focal lengths may lead to larger projected voxels, so the focal length may be increased to obtain better spatial resolution. This relationship means that there may be a trade-off between optical design parameters (like spatial/angular resolution, lens focal length, and FOV) and the design needs of a particular use case.

3D multi-view displays may offer a more engaging viewing experience than regular 2D displays. However, the specifications for display optics may be very different for a regular 2D display and a multi-view 3D display. The 2D display may have a very high spatial pixel resolution (e.g., in the range of ~500 pixels per inch (PPI)) to be considered high quality, and the image may be visible for a large field-of-view (FOV). In contrast, 3D display optics may restrict the FOV of single pixels considerably to enable showing of different images to different angular directions at the same time. In integral imaging devices, these specifications may be met with a microlens or lenticular array that increases angular resolution and decreases spatial resolution. If attached to a high-end 2D display, such an optical component may make the resolution of the display unacceptably low for mobile device use. To resolve this issue, an optical layer attached to light emitting pixels may be designed such that the optical layer transforms from an optically flat surface to a light collimating lens array.

Electrically-switchable liquid crystal (LC) lens systems are described in U.S. Patent 9,709,851 and journal article Y-P. Huang, et al., Autostereoscopic 3D Display with Scanning Multi-Electrode Driven Liquid Crystal (MeD-LC) Lens, 1:1 3D RESEARCH 39-42, (2010). U.S. Patent Application No. 2010/0079584A1 and PCT Patent Application No. WO2005011292 are understood to describe a combination of fixed microlenses and LC diffusers. A few issues with such devices include the added system complexity and the use of electrical drive circuitry that adds manufacturing expenses and makes the device more difficult to construct and operate. The use of electricity for the switching between two optical states may create an issue for a mobile device that relies on a limited power source, like a rechargeable battery. Adding a removable lenticular sheet to a mobile display, e.g., by integrating the optical layer to a phone case, may have a problem because the protective glass layer typically found on top of the pixel matrix may limit considerably the achievable spatial and angular resolution. Such an approach also may be very sensitive to image artifacts because the removable layer may not be aligned for the proper accuracy of a fine pixel pitch display to generate a high-quality 3D image.

### Ordered Buckling of Elastic Materials

Thin-film buckling is a phenomenon described in, for example, the journal article B. Wang, et al., Buckling Analysis in Stretchable Electronics, 1:5 NPJ FLEXIBLE ELECTRONICS (2017). Uncontrolled buckling under mechanical stress during bending or due to different thermal expansion coefficients of material layers may be a risk to the functionality of components and devices utilizing printed electronics.

In some embodiments, the buckling phenomenon is employed as a way to make a large number of small surface features. This approach may use ordered buckling that is controlled by a design parameter of the elastic layer. With proper control, surface structures may be created that have predetermined shape and slope distributions that perform a certain function. Buckling techniques that may be adapted for embodiments described herein include those described in the journal article D-Y. Khang, et al., Mechanical Buckling: Mechanics, Metrology, and Stretchable Electronics, 19:10 ADVANCED FUNCTIONAL MATERIALS 1526-36 (2009) *("Khang")* and J.B. Kim, et al., Wrinkles and Deep Folds as Photonic Structures in Photovoltaics, 6 NATURE PHOTONICS 327-332 (2012).

If buckling occurs on a flat and unstructured substrate, the pattern is most likely random. However, there are several different methods available for controlling the buckling behavior of elastic surfaces. One method is to coat an elastic substrate like PDMS (polydimethylsiloxane) with a metallic mesh that causes stress to the material when the combination is cooled down and the two materials shrink differently. This stress is released when the elastic substrate material buckles. Resulting wrinkles may have a predetermined shape and amplitude controlled with the metallic coating mesh design, according to journal article J. Yin, et al., Deterministic Order in Surface Micro-Topologies Through Sequential Wrinkling, 24(40) ADVANCED MATERIALS 5441-6 (2012) ("*Yin*"). Other methods (e.g., molds as described in journal article P.J. Yoo, et al., Physical Self-Assembly of Microstructures by Anisotropic Buckling, 14(19) ADVANCED MATERIALS 1383-87 (2002)) use thin polymer films with different elasticity according to *Yin,* and regions of uniform material layers that have been UV cured in order to affect the elasticity profile according to journal article W.T. Huck, et al., Ordering of Spontaneously Formed Buckles on Planar Surfaces, 16(7) LANGMUIR 2000 3497-3501 (2000).

When creating an ordered buckling pattern, if the local material bending radius is too small or the internal shearing forces are too high, ruptures and layer delamination may start to occur randomly if the material plasticity limits are exceeded. Design rules and, e.g., finite-element modeling of material deformation behavior under stress, may be used when such structures are designed. Elastic surfaces tend to buckle to natural sinusoidal linear patters that have a certain surface wavelength and amplitude according to journal article *Khang.* This shape may be easier to produce than other possible wrinkle formations. However, also other ordered patterns are possible to create by applying e.g., bi-axial strain to the elastic material layer. With a suitable strain profile it is even possible to create well-ordered two-dimensional herringbone structures where the material buckles in zigzag form according to *Yin* and journal article P-C. Lin & S. Yang, Spontaneous Formation of One-Dimensional Ripples in Transit to Highly Ordered Two-Dimensional Herringbone Structures Through Sequential and Unequal Biaxial Mechanical Stretching, 90 APPLIED PHYSICS LETTERS (2007) ("*Lin*")*.*

In some embodiments, a flexible 2D display is bent or curved to transform the display into a 3D multi-view display. The functionality may make use of ordered buckling of an elastic optical layer under mechanical stress. A flexible display (e.g., an OLED panel) with a dense array of small pixels may be coated with an elastic layer of optical material that has a linear array of transparent and more rigid baffles. A frame around the display may be provided to allow for bending of the device into a predetermined curved shape. This bending imparts compressive forces and mechanical stress on the elastic material causing the layer to buckle into an ordered lenticular shape using a rigid baffle array. The lenticular shape collimates light emitted from display pixels into narrow light beams in one direction enabling a multi-view 3D image to be rendered.

Such a display may be switched between 2D and 3D display modes. A standard 2D image may be shown when the device is kept flat. In this mode, the optical layer over the display pixel matrix may have no substantial surface features, and light emitted from a single pixel may exit the optical structure with a wide field of view. Emission patterns of pixels may overlap and cover both eyes of the viewer. In 2D mode, the display shows a single image with the full high spatial resolution determined by the display panel pixel pitch. A three-dimensional (3D) mode may be activated by mechanically bending the display to a predetermined radius of curvature. In 3D mode, the single pixel emission patterns may become narrower due to the buckled lenticular optical surface features. A limited beam FOV may enable different images to be shown to each eye of a viewer, and a 3D autostereoscopic image may be rendered. Ordered buckling may be used to operate a display device with different optical specifications for 2D and 3D display modes.

Such a display device may be switched mechanically between a 2D mode with an outer optical layer that is flat and a 3D mode with a layer that has a lenticular structure. This operation allows the use of the 2D mode without loss of display resolution because the optical structure functionality is added or removed by switching between modes mechanically.

Such a device may be used with mobile devices. A 3D image may be shown by interlacing a multi-view image using the same display panel that is used for standard 2D images. Mobile devices also contain front facing cameras that may be used to actively calibrate displaying of a 3D image.

The ability of the buckled structure to limit the field of view may be used in some embodiments to create an adjustable privacy filter for the mobile device or to save power due to the emitted light energy being more concentrated to a narrower emission angle, making the image brighter in the direction of the projected pixel images.

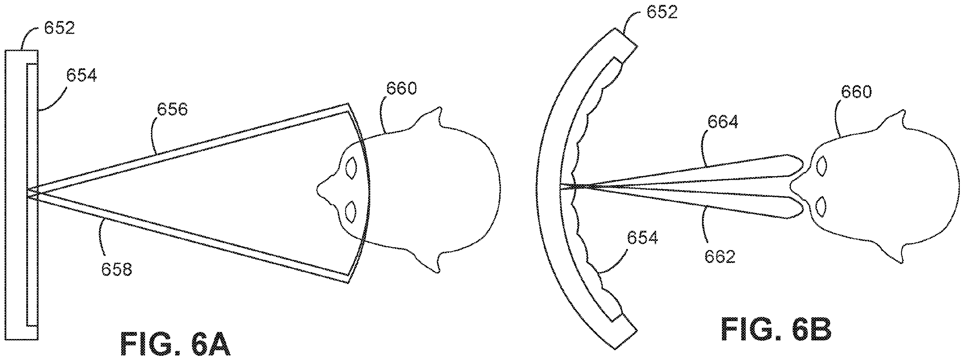

FIG. 6A is a schematic plan view illustrating an example display 652 in a 2D mode according to some embodiments. FIG. 6B is a schematic plan view illustrating the same display 652 in a 3D mode according to some embodiments. A device may switch between 2D and 3D modes, such as by a user bending the display, to switch between a flat surface and a curved surface. FIGs. 6A and 6B present an example display structure 652. The display may be used in standard 2D image mode by keeping the display flat. In 2D mode (FIG. 6A), the optical layer 654 overlaying the display emitter matrix may have no substantial surface features, and light emitted from a single pixel exits the optical structure with wide FOV. Emission patterns of all pixels overlap and cover both eyes of the viewer. For example, a field of view 656 of a first light emitter and a field of view 658 of a second light emitter are largely overlapping, and the light from both emitters can be seen simultaneously by both eyes of the user 660. In 2D mode, the display shows a single image with the high spatial resolution, which may be determined by the pixel pitch.

The display 652 may be switched into 3D mode by bending the display. In some embodiments, the display is bent to a predetermined radius of curvature. Bending causes mechanical stress to the elastic optical layer, and the elastic optical 654 layer starts to buckle, forming an array of lenticular lenses on top of the pixel matrix. (The size of the lenticular lenses is exaggerated in FIG. 6B and other illustrations for the sake of clarity.) In 3D mode, the single pixel emission patterns become narrower, and the limited FOV enables a different image to be shown to each eye, causing a 3D autostereoscopic image may be rendered. For example, the field of view 662 of one light emitter may be visible only to the left eye of the user, and the field of view 664 of another light emitter may be visible only to the right eye of the user.

In FIG. 6A, the FOV is shared by both eyes. In FIG. 6B, each eye may see a different FOV. By bending the display, a flexible 2D display may switch to 3D multi-view display mode. This functionality may occur, for example, by ordered buckling of an elastic optical layer when placed under mechanical stress, such as bending. Bending may be used to alter the directional viewing of a planar 2D display to create a 3D multi-view display or a privacy-constrained 2D display. FIG. 6A shows normal operation for a wide view of a flat display in 2D mode. FIG. 6B shows 3D or privacy operation with an optical property changed by bending the display.

For some embodiments, selecting the display mode may include selecting the display mode from between at least a wide viewing angle mode (such as a 2D display mode) and a limited viewing angle mode (such as a privacy display mode). For some embodiments, selecting the display mode may include selecting the display mode from between at least a wide viewing angle mode (such as a 2D display mode) and a multi-view three-dimensional (3D) mode. For some embodiments, the optical layer may be flexible, and the optical layer may switch between two states of deformation: (1) a first state of deformation such that the optical layer is substantially planar (such as is shown in FIG. 6A); and (2) a second state of deformation such that the optical layer is a curved shape (such as is shown in FIG. 6B). For some embodiments, the optical layer may be flexible, and the optical layer may switch between two states of deformation: (1) a first state of deformation such that the optical layer is a substantially flat surface; and (2) a second state of deformation such that the optical layer is a lenticular lens array configured for displaying 3D imagery. For some embodiments, the optical layer may be configured by bending the optical layer to switch between modes, such as between 2D and 3D modes and vice versa. For some embodiments, the optical layer may be configurable into at least a first state of deformation and a second state of deformation. For some embodiments, the first state of deformation may be associated with a two-dimensional image mode, and the second state of deformation may be associated with a three-dimensional image mode. For some embodiments, the first state of deformation may be associated with a first degree of bending of the optical layer (such as, for example, a radius of curvature greater than a predetermined threshold), and the second state of deformation may be associated with a second degree of bending of the optical layer (such as, for example, a radius of curvature less than the predetermined threshold), such that the second degree of bending is greater than the first degree of bending.

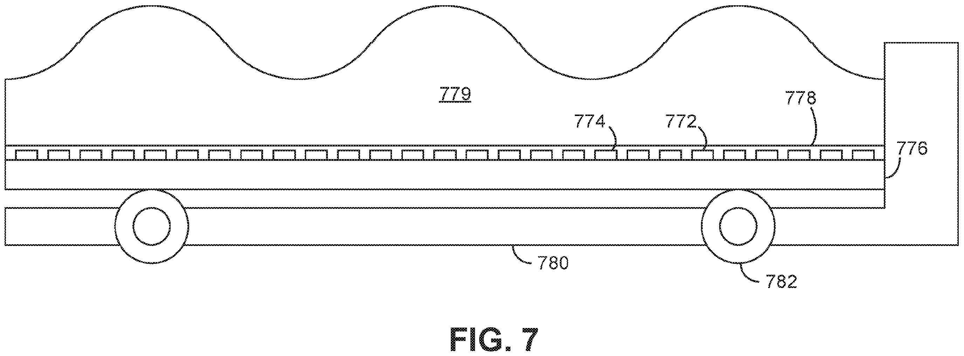

FIG. 7 is a schematic cross-sectional view illustrating an example set of structural elements of a display device according to some embodiments. FIG. 7 shows some example structural elements of such a display device. Light is emitted from a flexible display built on flexible thin substrates. The light emitting components, such as light-emitting elements 772, 774 may be individually addressable elements of an OLED panel or an array of µLEDs, bonded to a flexible light emitter substrate 776. The display panel may be coated with a protective flexible coating layer 778 that may be used as an adhesive if the elastic optical material layer 779 is laminated to the emitter layer. The elastic optical layer may be molded or casted directly onto the display panel. A mechanical frame structure 780 may hold together the display and optical layer stack and also may hold a light emitter drive circuit. The fame may have mechanical joints 782 that divide the device into several rigid sections that may be bent to form an overall arched (curved) shape for the display. The frame design may support switching between two shapes, such as flat and a fixed radius arch or curve, and/or the frame may allow the user to bend the display into different curvatures. Bending of the frame structure may make the elastic optical surface buckle to form lens shapes. The lens shapes may be curvature-dependent and may depend on, e.g., buckling period, material elasticity, layer thicknesses, and overall bending radius.

For some embodiments, a display apparatus may include: a mechanical layer 780 with flexible joints 782; a flexible display emitter layer including individually addressable light-emitting elements 772, 774; and a flexible transparent layer 779 with optical properties that vary when flexed. For some embodiments, a display apparatus may include a light emitting layer that is deformable, and the light emitting layer may be configured to be deformed synchronously with the optical layer.

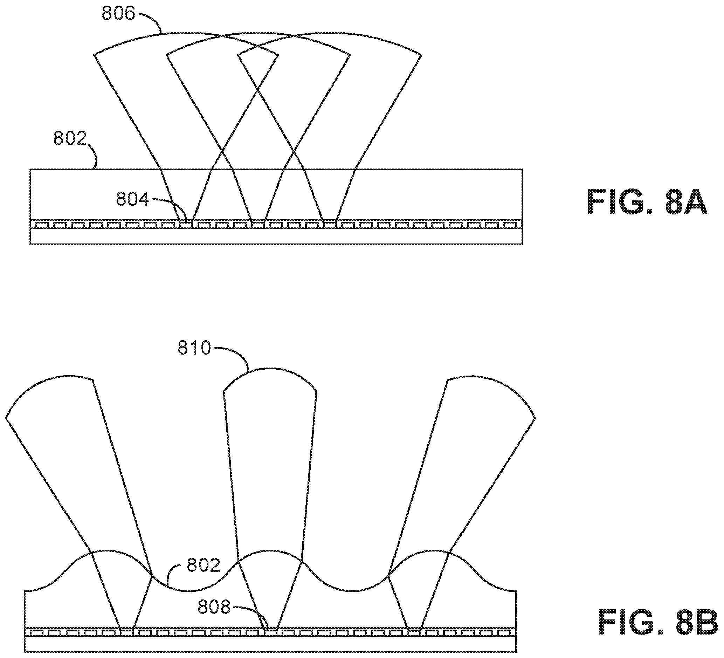

FIG. 8A is a schematic cross-sectional view illustrating an example display without buckling according to some embodiments. FIG. 8B is a schematic cross-sectional view illustrating an example display with buckling according to some embodiments. FIGs. 8A and 8B illustrate the optical functionality of an example structure in 2D mode (FIG. 8A) and in 3D mode (FIG. 8B). While the elastic optical layer 802 is substantially flat, the elastic optical layer causes only a slight increase to the large FOV emission pattern of the emitters due to having a higher refractive index than the ambient air. For example, an emitter 804 may have a field of view 806, which may be wide enough to be seen by both of a user's eyes. Emitters have an emission maximum at the direction of the surface normal, and wide, overlapping FOVs are used to enable all pixels to be visible to both eyes of the viewer. If the surface is buckled, as in FIG. 8B, the emission patterns are reduced to much narrower FOV beams in the direction of the lenticular shape. For example, an emitter 808 may have a field of view 810, which may be narrow enough to be seen by only one of a user's eyes.

In the transverse direction, the emission patterns retain the wide FOV of the sources. Relative position of the emitter to the lenticular shape optical axis determines the projected beam tilt angle with respect to the display local surface normal. The narrow beams are located in the same directional plane as the viewer's eyes to create correct parallax effect with multiple images. The display may create horizontal parallax only if linear buckles are used in the horizontal direction. However, both horizontal and vertical parallax images may be created by utilizing two-dimensional structures (e.g. herringbone structures) using techniques as described above (e.g., with regard to *Lin*) or by bending the display in diagonal direction and forming diagonal lenticular shapes. FIG. 8B shows some examples of a small FOV for viewing of on-axis light emitters and a tilt angle for off-axis light emitters.

For some embodiments of a display structure, the optical layer may be compressible such that if the optical layer is in a first state of deformation, the optical layer is compressed, and if the optical layer is in a second state of deformation, the optical layer is relaxed compared to the first state of deformation. For some embodiments of a method using a display structure, the optical layer may be compressed in a first state of deformation, and the optical layer may be relaxed (in comparison with the first state of deformation) in a second state of deformation. The first state of deformation in which the optical layer is compressed may correspond to, e.g., a 3D display mode, and the second state of deformation in which the optical layer is relaxed may correspond to, e.g., a 2D display mode.

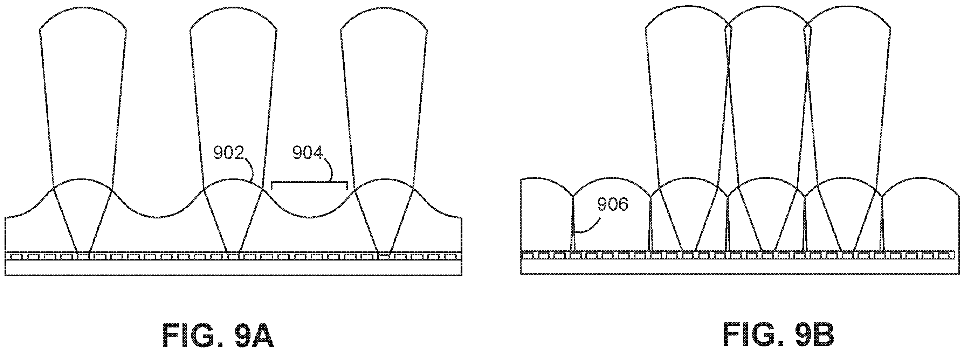

FIG. 9A is a schematic cross-sectional view illustrating an example display with sinusoidal buckling according to some embodiments. FIG. 9B is a schematic cross-sectional view illustrating an example display with ordered buckling according to some embodiments. FIGs. 9A and 9B present two example embodiments using elastic optical layers. In FIG. 9A, sinusoidal buckling occurs without assistance structures, and the surface 902 is formed into a natural sinusoidal shape. Flexible and optically transparent materials may include, e.g., methyl-methacrylate (e.g., tradename Kurarity) and aromatic thermoplastic polyurethanes (TPU) that may be manufactured into thin sheets or foils with high volume extrusion processes. Such materials may be used to adjust surface amplitude more naturally with the display bending radius, and no sharp corners are formed that may cause irreversible deformations. Some materials may cause a relatively low spatial resolution display due to the trough regions (e.g. 904) formed between lenticular shapes such that 3D image may be rendered with some dark pixels between lenses. Without these dark zones, the image contrast may be too low because the relatively large bending radius in the troughs may cause large amounts of stray light.

A further example optical elastic layer design case shown in FIG. 9B has non-elastic (or less elastic) baffles (e.g. transparent baffles) in an array that guides the surface buckling. FIG. 9B shows an example of ordered buckling induced by an array of baffles 906. The example of FIG. 9B may be used to generate a higher-resolution display that that of FIG. 9A. The baffled optical layers may be made, e.g., by molding the more rigid structures and filling the cavities with elastic material that has the same refractive index. An example of one such material pair is cyclo-olefin-polymer (e.g., Zeonex 480R) and clear silicone that both have a refractive index, e.g., of ~1.53 at 550 nm wavelength. Another method of forming the baffles is to use, e.g., selective UV-curing and form the more rigid and more elastic sections to a single layer of material as mentioned previously. The baffles 906 allow ordered buckling as the rigid sections force the more elastic sections to buckle more under mechanical stress. Higher-resolution lenticular shapes may be created that have smaller curvature values in the troughs between lens shapes. The smaller curvature values may be kept to less than the elasticity limit of the material, and the display curvature may be limited to a small radius such that the device may be bent with the device frame design.

For some embodiments of a display structure, the optical layer may be stretchable such that if the optical layer is in a first state of deformation, the optical layer is stretched, and if the optical layer is in a second state of deformation, the optical layer is relaxed compared to the first state of deformation. For some embodiments of a method using a display structure, the optical layer may be stretched in a first state of deformation, and the optical layer may be relaxed (in comparison with the first state of deformation) in a second state of deformation. The first state of deformation in which the optical layer is stretched may correspond to, e.g., a 2D display mode, and the second state of deformation in which the optical layer is relaxed may correspond to, e.g., a 3D display mode.

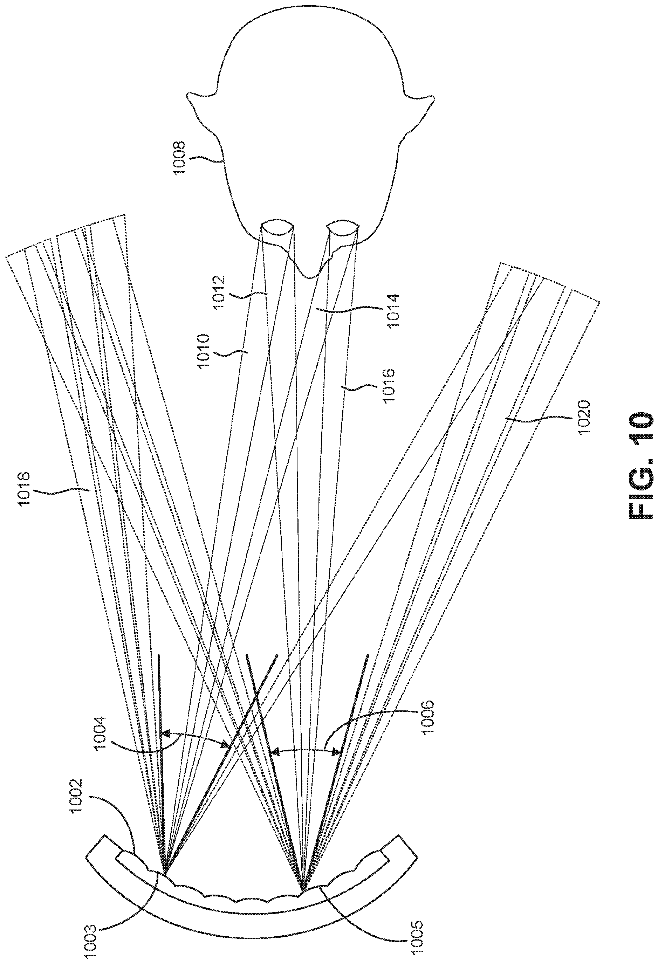

FIG. 10 is a schematic plan view illustrating an example curved display viewing geometry according to some embodiments. The beams emitted from different parts of the display surface 1002 may overlap at the viewing distance. The system may produce multiple view beams from a single emitter. FIG. 10 presents schematically the viewing geometry for a curved display in 3D mode. Primary view beams emitted from display center and display edges cross at the viewer position 1008 to make the same view images for the left and right eyes separately. The total FOV of the beam bundle emitted from one lens structure is surrounded by secondary views that are coming from emitter light spread over neighboring lenses. These secondary beam views may be considered as stray light if the secondary beam views are visible to the viewer. However, the secondary beams may be used to form the image if the beam directions are to be changed by more than the amount of tilt caused by the lens shape bending. This design situation is more likely to come up with the buckled lens structures than with rigid molded lens structures because use of the buckling effect and material elasticity range may restrict the local lens surface curvatures more than what is possible with, e.g., injection molded fixed polymer microlenses.

As an example, light exiting the display through a lenticular lens region 1003 extends across a primary field of view 1004. Secondary views 1018 may be visible outside the primary field of view. Within the primary field of view 1004, light from one emitter may generate a beam 1010 that is visible to the right eye of the user 1008, and light from another emitter may generate a beam 1014 that is visible to the left eye of the user. Light exiting the display through a lenticular lens region 1005 extends across a primary field of view 1006. Secondary views 1020 may be visible outside the primary field of view. Within the primary field of view 1006, light from one emitter may generate a beam 1012 that is visible to the right eye of the user 1008, and light from another emitter may generate a beam 1016 that is visible to the left eye of the user.

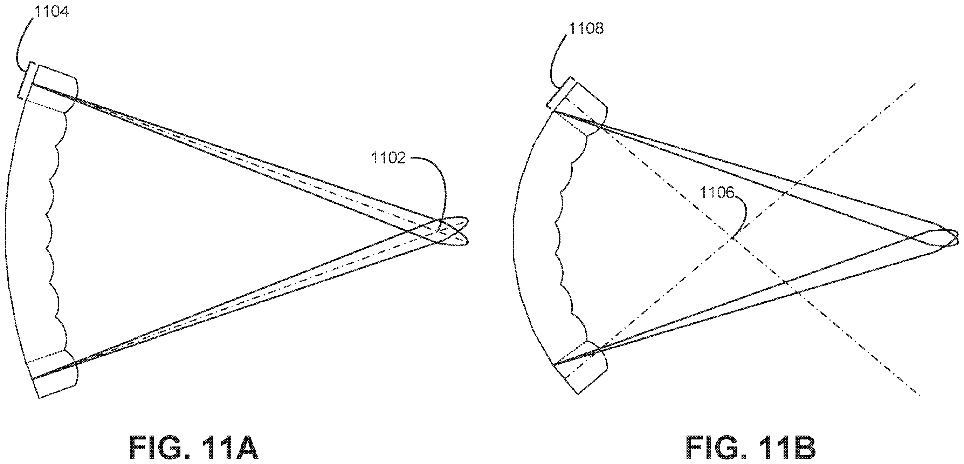

FIG. 11A is a schematic plan view illustrating a first example display curvature design according to some embodiments. FIG. 11B is a schematic plan view illustrating a second example display curvature design according to some embodiments. In FIG. 11A, the display center of curvature 1102 is at approximately the same as an intended viewing distance. In the example of FIG. 11A, light sources may be positioned more closely to the optical axis of each projector cell, such as cell 1104. This arrangement allows image rendering calculations such that the display curvature makes the beam bundle FOVs emitted from different parts of the display area naturally overlap at the viewing distance. The sources that are positioned at the optical axis of the projector cell for each lens shape project beams to the same central spot at the viewing distance.

FIG. 11B illustrates an embodiment in which the display radius center of curvature 1106 is located between the display and viewer positions. In FIG. 11B, light sources located outside the optical axis of the corresponding projector cell (e.g. cell 1108) are used at the display edges in order to tilt the beams more and compensate for the angular difference between lens surface optical axis and required beam direction. Secondary view projection directions also may be used for image formation at the display edges if sharper angles are used for beam overlap.

Because the lenticular lens shape radius is connected to the display overall bending radius, the design shown in FIG. 11B may be used if the display curvature does not cause large enough of a buckling effect in the optical layer. A tighter display radius may be used for a larger optical effect of the lenses. Pixel activation and image rendering may be adjusted for the overall display curvature and resulting lens buckled shape. In embodiments in which the display and lens curvatures are fixed to single values, a look-up table may be used for this adjustment. In embodiments in which an adjustable curvature is used for, e.g., viewing distance adjustment, a more complex rendering approach may be used. Due to the connection between display curvature and buckled lens shape curvature, an optomechanical tolerance analysis may be used during design to see the dynamic changes in optical behavior and effects of, e.g., an uneven bending radius. An eye tracking camera integrated into the display device may be used in some embodiments for active viewer distance measurements. This feature may be implemented with a mobile device that has a front-facing camera that may be calibrated to the user facial measurements (such as, e.g., personal eye pupil distance). The calibration also may be done automatically by, e.g., projecting two beams from the display edges and by locating the reflected spots on the viewer face with the camera.

Buckled lens shapes and display panel pixel layouts may be fitted together in order to meet the specifications for the 3D image. The number of pixels for each lens shape may determine how many different views may be created with the display structure. A direct trade-off situation between angular and spatial resolution may exist because the system may use only spatial multiplexing for the 3D image creation. This trade-off leads to image spatial resolutions in 2D and 3D modes being different from each other, and the total performance of the whole display system may be balanced for these two modes. The 3D image may have lower spatial resolution than the 2D image if the 2D mode is not artificially sampled down by, e.g., grouping pixels for a more balanced overall look. The display may be used with full display panel spatial resolution in 2D mode because there are no obstructing optical structures when the elastic optical layer is made flat.

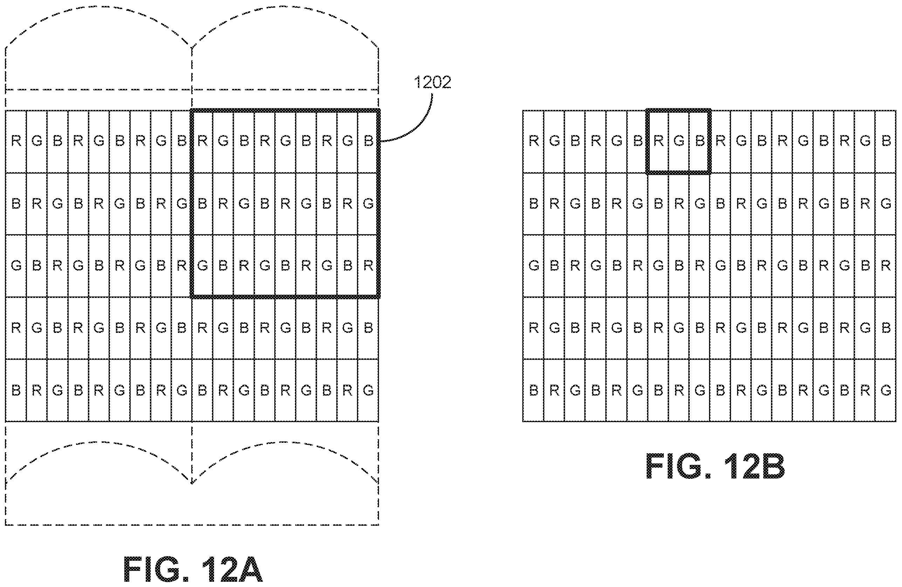

FIGs. 12A and 12B are schematic front views illustrating a first example of a continuous three-color pixel layout used in 2D and 3D display modes according to some embodiments. In FIGs. 12A-12B, the pixel matrix has example square full-color pixel shapes in both the 3Dmode (FIG. 12A) and the 2D mode (FIG. 12B). Due to the trade-off between spatial and angular resolutions, spatial resolution of the full-color pixels may be lower in the 3D mode than in the 2D mode as shown with the thick black frames in the image. In 2D mode, the example rectangular pixels have three colors in successive order in the horizontal direction, whereas in 3D mode, the example pixels have three colors arranged next to each other in the vertical direction. With such an arrangement, a 3D pixel may be created with balanced resolution between the spatial and angular domains. A square shaped 3D pixel 1202 may project full-color images to nine different angular directions.

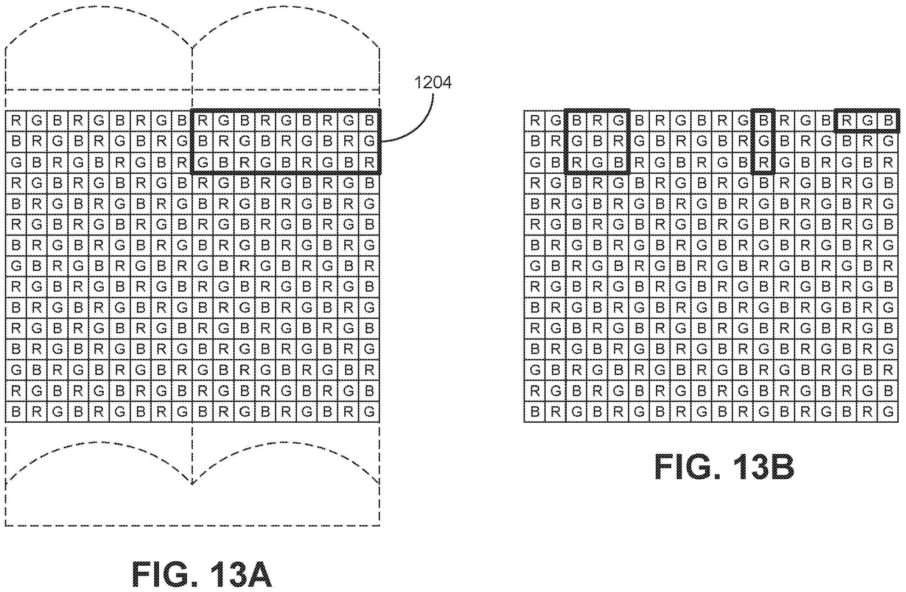

FIGs. 13A-13B are schematic front views illustrating a second example of a continuous three-color pixel layout used in 2D and 3D display modes according to some embodiments. The second example pixel layout shown in FIGs. 13A-13B has better spatial resolution in 3D mode in the vertical direction than in the horizontal direction. In 2D mode as shown in FIG. 13B, the pixels may be combined in three different ways to emphasize resolution either for the vertical or horizontal directions, but images also may be created with a square full-color pixel. With a square full-color pixel layout, 3D images may have a somewhat improved appearance. This improvement may occur because the vertical direction may be created with more pixels, and the human visual system may perceive the combined double images as higher resolution than single, separate stereoscopic images in the horizontal direction. For some embodiments of a display apparatus, subpixels may alternate colors in both horizontal and vertical spatial directions. For example, the pixels and subpixels shown in FIGs. 13A and 13B show example light emitter layouts for alternating subpixel colors in the horizontal and vertical spatial directions. A 3D pixel 1204 may be created with the ability to project full-color images to nine different angular directions.

In some embodiments, while the display is used in 2D mode, the display may have a shallow lenticular structure in front of the pixels that slightly limits the FOV. The display may be turned into a 3D display by curving the device, which causes the lenticular shapes to have a sharper curvature and narrower projected beams. The 3D image may be formed with the pixels whenever a single projected beam size is below eye pupil distance at the viewing distance. Such a design may be used to adjust the FOV for, e.g., different viewing distances or number of viewers. In some embodiments, a front facing camera may be used for determining the single or multiple user eye locations and distance for image rendering calculations.

Embodiments described herein that limit the field of view of the display may be used for purposes other than the creation of a 3D image, such as privacy mode and energy savings. Privacy mode may be used, e.g., in large crowds or in confined spaces, like in an airplane. Energy savings may be achieved by limiting the field of view because display brightness may be lowered if the light is concentrated into a narrower angular range. By bending the device, the field of view may be adjusted for some embodiments without an electrical control system change.

In addition to being compressed for a buckling effect, the display optical surface also may be manufactured as a lenticular surface and turned into a flat surface by stretching it. Materials may operate differently when they are stretched or compressed. Such mechanochromic materials may, e.g., change their color or transparency under pressure, such as those described in Y. Jiang, et al., Dynamic Optics with Transparency and Color Changes under Ambient Conditions, 11 POLYMERS 1-9 (2019). Some embodiments may use nano-scale surface structures that change their optical properties when the surface geometry is changed, for example as described in E. Lee, et al., Tilted Pillars on Wrinkled Elastomers as a Reversibly Tunable Optical Window, 26(24) ADVANCED MATERIALS 4127-33 (2014). In some embodiments, elastic optical layers with integrated baffles are used that switch from a transparent state in 2D mode to an opaque state in 3D mode to limit stray light.

Mechanical pressure that transforms the optically elastic material shape may be induced with methods other than bending. For example, a metallic mesh with high transparency may be coated onto the elastic layer, and the surface shape transformation may be made with heat driven by electric current resistance in the mesh. The surface may contain an array of, e.g., piezoelectric actuators that change shape of the surface by compressing or stretching the surface locally. These example structures may be combined to create an elastic layer with more complex optical structures, such as, e.g., shapes that are sinusoidal in two directions or have locally alternating patterns.

In some embodiments, a rigid display is manufactured using deformation of an optical layer to generate a lenticular array. For example, an OLED display may be wrapped around a transparent cylinder, and the light emission may be directed towards the internal volume. An elastic optical polymer layer that buckles may be attached to the display to form a series of lenticular lenses that are used in creating a 3D image inside the cylinder. The same material layer may be adjusted for different use cases, e.g. to create cylinders with different curvatures. If, e.g., UV-curable material is used in the elastic layer, the optical shape may be fixed and may form complex rigid optical features without a mold.

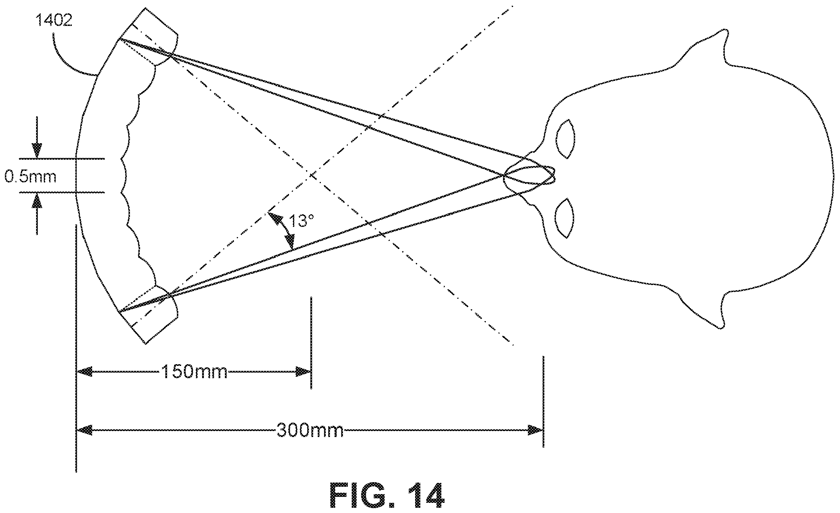

FIG. 14 is a schematic plan view illustrating an example display system according to some embodiments. A mobile display 1402 with a 6" three-dimensional (3D) light field (LF) screen is placed at 30 cm distance from a viewer. If the display is kept flat, a 2D image with 2660 x 1500 full-color pixels is shown with a wide FOV that covers both eyes of the viewer. Three-dimensional (3D) display mode may be activated by bending the device to a 150 mm radius of curvature corresponding to the display mechanics design. The bending causes mechanical stress to the elastic optical layer laminated on top of the flexible OLED display panel, and a lenticular sheet is formed due to material buckling. Some of the light sources may be located off-axis from the optical axis for each projector cell located near the edge of the display. For the example shown in FIG. 14, for projector cells located near the edge of the display, off-axis light sources are illuminated to direct beams at angles of around 13° from the optical axis.

For the example display structure shown in FIG. 14, the viewer may be located at a viewing distance of 300 mm. The lenticular sheet has 0.5 mm wide cylindrical lenses that are distributed across the display surface in the horizontal direction, enabling multiple different images to be projected to different angles in the horizontal direction. An autostereoscopic 3D image may be formed if the pixel matrix shows an interlaced image of different view directions, and the viewer's eyes may see two different images with a small FOV that covers only one eye at a time.

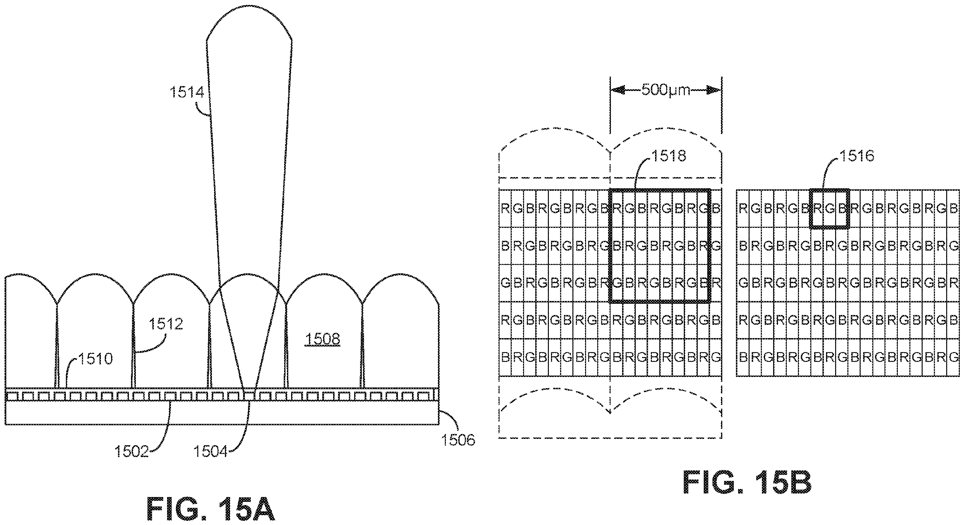

FIG. 15A is a schematic cross-sectional view illustrating an example display system optical structure according to some embodiments. FIG. 15A shows schematically the structure and functionality of example display optical layers when the system is used in 3D mode. The light emitting pixels (e.g. 1502, 1504) may be attached to a flexible substrate 1506 (e.g. a foil) and laminated to an elastic optical layer 1508 with a protective elastic substrate adhesive coating 1510 between the light emitting pixels and the elastic optical layer.

The optical layer may have non-elastic transparent baffles 1512 that are made from, for example, COP material Zeonex 480R. The space between the baffles may be filled with optically clear and elastic silicone or other transparent elastomeric material. Because both of these materials may have refractive indices of ~1.53 @ 550 nm, the interface between these materials is optically transparent. The sheet may be made with a continuous extrusion process, and the display component may be cut to a rectangular piece that fits the OLED panel measurements. Baffles determine the lenticular lens pitch because ordered buckling shapes the lenticular silicone lenses during device bending. A full-color pixel may emit light with a primary beam 1514 that has a FOV of 8.8° when the 3D mode is activated. As a result, the image of a single pixel may be projected to a viewing distance of 300 mm such that a ~46 mm wide stripe is visible to only one eye in the horizontal direction.

FIG. 15B is a schematic front view illustrating an example OLED panel pixel geometry according to some embodiments. FIG. 15B presents the layout and measurements of an example OLED pixel matrix. When the display is used in 2D mode, three differently colored pixels that are each 16 µm wide and 48 µm high are combined together to form one full-color square pixel 1516 that is approximately 50 µm x 50 µm in size. In this mode, the pixel density is 508 pixels per inch (PPI), and the display may be considered high-resolution because the pixels are no longer visible with the naked eye at the specified viewing distance. In 3D mode, the differently colored pixels are grouped differently, and one full-color single-direction pixel is formed from three colored pixels that are next to each other in the vertical direction. A full-color 3D pixel 1518 may be created that has a spatial size of 133 µm x 150 µm and that emits light in eight different angular directions. Each beam travelling in a different horizontal direction may originate from a light-emitting stripe that is only 16 µm wide. The different colors of a single directional pixel are mixed in the vertical direction because the lenticular features have no optical power and the emitted light FOV on the colored sub-pixels are very wide. In 2D mode, the optics may be flat with no optical apertures. In 3D mode, the optics may be buckled with optical cells that are, e.g., 500 µm wide.

For some embodiments, a display apparatus may include: a light emitting layer that includes individually controllable light emitting elements; a deformable optical layer that is configurable by a user into at least a first state of deformation and a second state of deformation, the optical layer having different optical properties in the first state of deformation compared to the second state of deformation; and control circuitry that is configured to control the light emitting elements to display imagery to the user, the apparatus configured to display two-dimensional (2D) imagery when the optical layer is configured to the first state of deformation, and the apparatus configured to display three-dimensional (3D) imagery when the optical layer is configured to the second state of deformation.

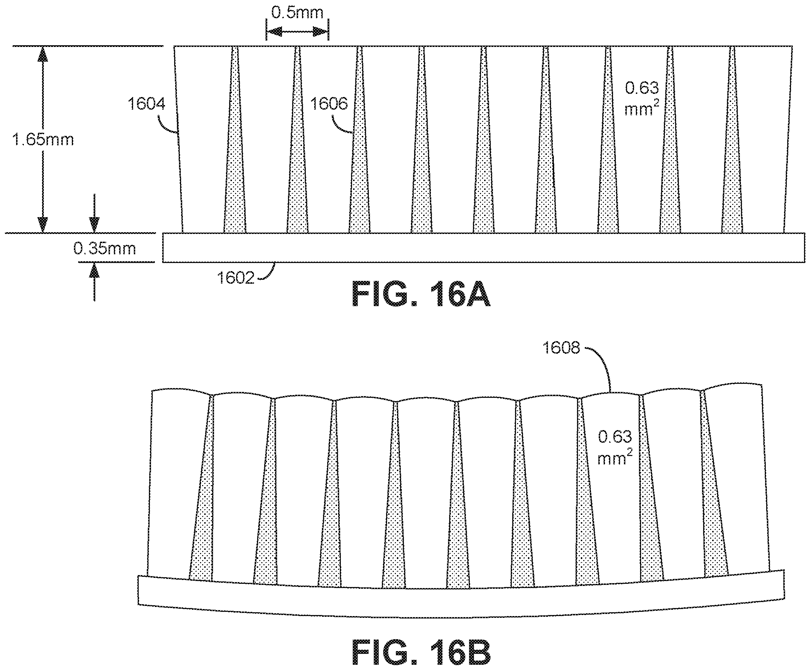

FIG. 16A is a schematic cross-sectional view illustrating an example optical structure geometry in 2D mode according to some embodiments. FIG. 16B is a schematic cross-sectional view illustrating an example optical structure geometry in 3D mode according to some embodiments. Example dimensions are provided for the optical structure in both 2D and 3D modes. These dimensions are provided only as an example; other embodiments have different dimensions.

In the example of FIGs. 16A-16B, light emitting OLED pixels (not shown) are be covered with a transparent 0.35 mm thick protective substrate layer 1602. The elastic optical polymer layer 1604 may have a thickness of 1.65 mm when the surface is flat. The shape and location of transparent baffles 1606 may determine the 0.5 mm pitch between lens shapes that is formed when the display is bent with the 150 mm total radius to activate the 3D mode, shown in FIG. 16B. This bending radius may cause the elastic silicone material between baffles to buckle into well-ordered lenticular shapes that have, e.g., a 1.05 mm radius of curvature.

The cross-sectional area of a region of the elastic optical polymer layer 1604 between adjacent baffles generally remains the same in the bent and the flat configurations. In the example of FIGs. 16A-16B, the cross-sectional area of such as region is approximately 0.63 mm². When the display is bent to change from 2D mode to 3D mode, the projector cell outer surface buckles and forms an outwardly curved surface to release the mechanical stress induced by bending and to keep the same cross-sectional area confined between the more rigid baffles.

To test optical functioning of the design, a set of raytrace simulations was performed with commercial optical simulation software OpticsStudio 19. One 16 µm wide source surface with green 550 nm light was projected through a 0.35 mm thick protective substrate layer and a 1.68 mm thick elastic optical polymer lenticular lens structure that had a surface curvature radius of 1.05 mm. Angular divergence of the sources was set to a Gaussian distribution with a full-width, half-maximum (FWHM) value of ±34°. With this angular distribution, light emitted by a single source was able to reach the next two neighboring lens apertures on both sides of the 0.5 mm wide selected projector cell. A 600 mm wide detector surface placed at the designated 300 mm viewing distance from the optical structure was used for collecting the simulation results to spatial irradiance and angular radiance distributions. Simulations were performed with both the 2D mode flat and 3D mode buckled surface structures to see the FOV difference for each mode. The 3D mode functionality was analyzed with two separate simulations. The first simulation was made with a light source that was at the center of the lens optical axis. The second simulation was made with a light source that was off-axis from the lens optical axis for the projector cell. The second simulation was used to simulate projector cells positioned at the edge of the curved display surface.

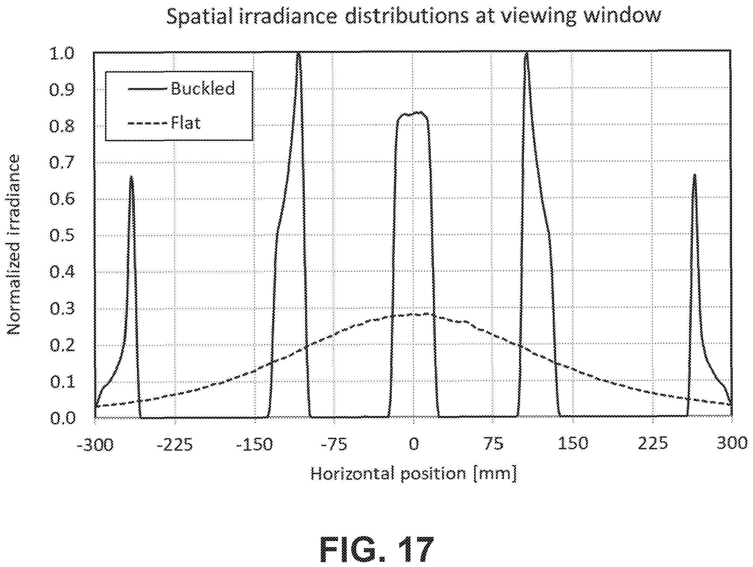

FIG. 17 is a graph showing example spatial irradiance distributions at a viewing window according to some embodiments. FIG. 17 shows simulated irradiance distributions of a single, centrally located light source at the designated viewing distance (or window) for buckled and flat display optics. The distribution profile is a wide Gaussian for the 2D display mode due to the flat optical layer surface and Gaussian emission profile of the light source. The 3D display buckled surface reduces the FOV of the central beam into an ~9° divergence, and the source is imaged to the viewing window as a series of 40-50 mm wide stripes. Such a distribution may be used to form a 3D image because the single pixel image width is below the ~64 mm average human interpupillary distance. The central intensity maxima come from the emitter primary image. Intensity peaks on both sides at distances of -100 mm from the center are the first order secondary pixel images coming from neighboring lenticular lenses in the array. For both simulations, the irradiance values were normalized to the maximum value measured for the 3D simulation. For 3D mode, light is concentrated to some narrow FOV beams that appear to be much brighter to the eye than what would be seen when the display is in 2D mode. The proper viewing window in the 3D mode is limited to around 170 mm wide area because the pixel secondary image peaks start to become visible at larger angles. In the 2D mode, the viewing window may be much wider because the single pixel irradiance distribution spans the whole 600 mm wide detector, and display pixels are visible from very large angles.

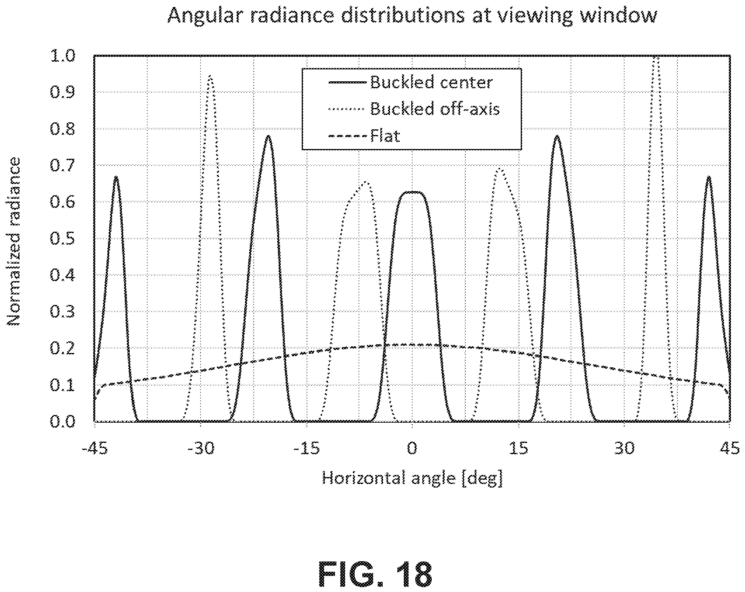

FIG. 18 is a graph showing an example angular radiance distribution at a viewing window according to some embodiments. FIG. 18 shows the simulated radiance distributions of the 2D display case (flat optics) as well as 3D display cases (buckled optics) such that the source is located at the lens optical axis and located off-axis. Each of the angular distributions shown in FIG. 18 is normalized to the maximum value measured for the 3D mode, off-axis simulation. The graph shows how much the FOV of the source emission pattern is affected by the buckled lenticular surface with respect to the flat surface in 2D display mode. The primary central image of a single pixel has a FOV of 8.8°, whereas the flat surface widens the FOV even more from the original emitter angular distribution value. For the 3D mode, off-axis simulation, a beam was projected for an angle of 13° from the lens optical axis. This angle is used for projector cells near the edge of the display area to overlap the pixel beams at the viewer position, which is shown in the viewing geometry of FIG. 14. Simulation results show that such a beam may be created with a first-order secondary image for a light source that is positioned -184 µm off-axis from a projector cell center, and the neighboring lens creates the image beam.

Overall, the simulation results of FIGs. 17 and 18 show that an optical method may be used to form a 3D multi-view image with a buckled lenticular structure. An example system may produce eight separate horizontal views inside a total FOV of -32°. A stereoscopic effect may be clearly visible because the two eyes of a viewer may receive two clearly distinct images. If the display is used in 2D mode, the FOV may be wide, and the display panel may be used with full resolution without obstruction from the optical structures used for 3D mode.

For some embodiments of a display apparatus, the optical layer may include one or more sections of flexible optical material such that each of the sections is separated by non-flexible baffle material. For some embodiments of a method performed by a display apparatus, detecting the state of bending of the optical layer may include detecting the degree of bending of the optical layer.

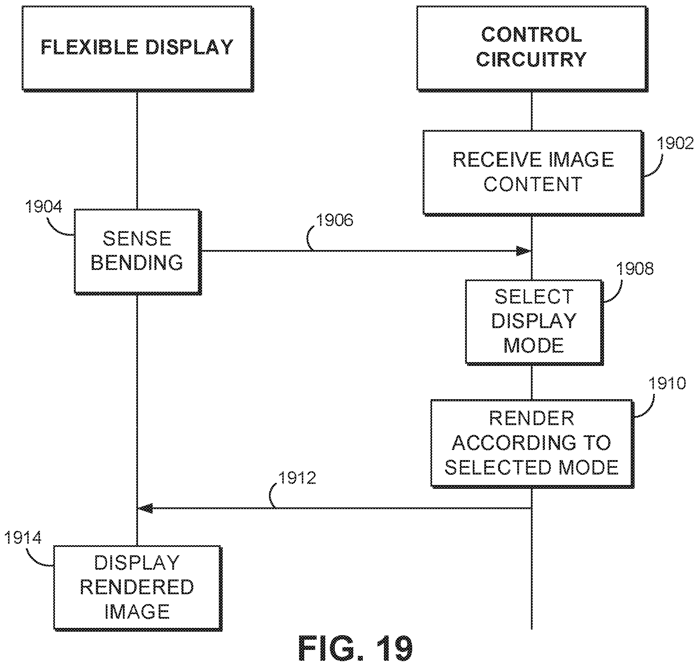

FIG. 19 is a message sequencing diagram illustrating an example process for generating a display view according to some embodiments. For some embodiments, a display renderer module or other control circuitry receives image content (1902) from an image content source (such as, e.g., an external server). A flexible display may detect or sense (1904) bending of the flexible display (such as, e.g., via an optical sensor or a strain gauge). The flexible display may send a communication (1906) indicating the amount of bending to the render device or process. A display mode may be selected (1908) by the renderer process. This selection may be based on the amount of bending. The display mode selected may be, e.g., 2D, 3D, or privacy. For example, the display mode may be selected such that the 2D display mode is selected for a small amount of bending up to a threshold. The display mode may be set to 3D display mode if the bending exceeds the threshold. For some embodiments, the display mode may be selected based on the context or use of the display. For example, the display mode may be set to a privacy setting if a certain set of environment criteria are met, such as the display being used in a crowd. The renderer device or process may render the image content (1910) per the display mode. The rendered image (or image content) may be sent (1912) to the flexible display. The flexible display receives the rendered image and displays (1914) the rendered image. The user sees the displayed view(s).

For some embodiments, the optical layer may be configured by the user selecting a display mode in a user interface. Such a selection may select between 2D and 3D display mode. A privacy display setting may be selected by the user via the user interface. A device may include a sensor, which may be used to determine whether the optical layer is configured in a first or second state of deformation. The first state of deformation, e.g., may correspond to 2D imagery, and the second state of deformation may correspond to 3D imagery. The device may be configured to display 2D or 3D imagery according to the state of deformation. The state of deformation may be determined based on the amount of bending detected. For example, a small amount of bending up to a threshold may correspond to selecting the first state of deformation and a larger amount of bending greater than the threshold may correspond to selecting the second state of deformation. The renderer process or device may receive a display mode selection from a user via a user interface. A separate process or device may receive the display mode selection from the user via the user interface, and the separate process or device may communicate the display mode selection to the renderer. The renderer may configure the optical layer according to the display mode selection, which may be received by the renderer or determined locally to the renderer. The display mode may be selected from a group that includes 2D and 3D display modes. The group also may include privacy or other display mode settings. The optical layer may be configured according to the detected state of bending of the optical layer. The state of bending of the light emitter layer may be detected, and the light emitter layer may be controlled so that the light emitter layer displays image content according to the detected state of bending of the light emitter layer. For example, a small amount of bending of the light emitter layer up to a threshold may correspond to a first state of bending and a larger amount of bending greater than the threshold may correspond to a second state of bending. The first state of bending may be associated with 2D display mode, and second state of bending may be associated with 3D display mode.

Stray light may be a general problem in multi-view displays. Some embodiments are implemented in devices that have a front facing camera, which may be used for viewer eye detection. The 3D image may be rendered in such a way that the secondary pixel images are directed away from the viewer's eyes.

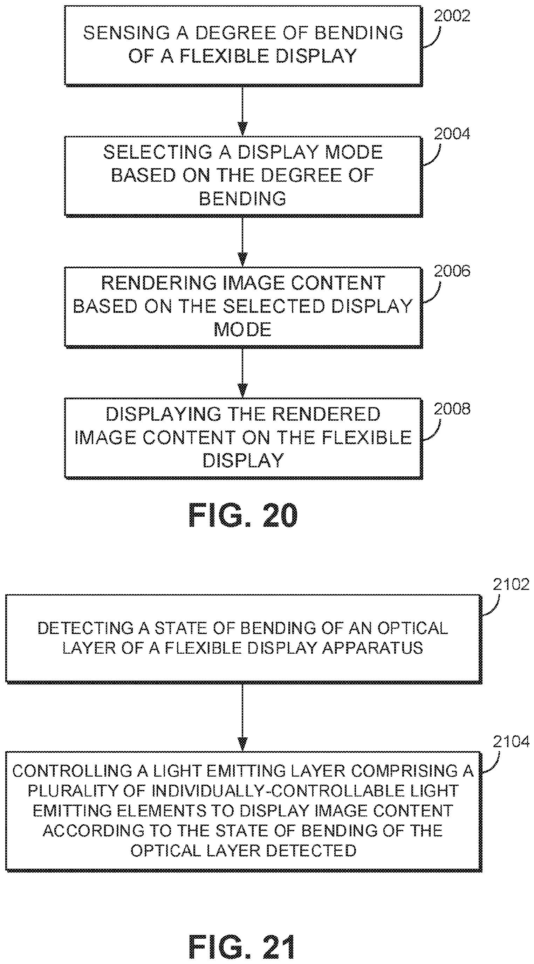

FIG. 20 is a flowchart illustrating an example process for creating a display with elastic optical layer buckling according to some embodiments. For some embodiments, an example process may include sensing (2002) a degree of bending of a flexible display. For some embodiments, the example process may further include selecting (2004) a display mode based on the degree of bending. For some embodiments, the example process may further include rendering image content (2006) based on the selected display mode. For some embodiments, the example process may further include displaying (2008) the rendered image content on the flexible display. For some embodiments, an apparatus is provided with at least one processor configured to perform the methods described herein. The processor may be configured using a non-transitory computer-readable medium storing instructions that are operative, when executed by the processor, to perform the example method or any method described above.

FIG. 21 is a flowchart illustrating an example process for creating a display with elastic optical layer buckling according to some embodiments. For some embodiments, an example process may include detecting (2102) a state of bending of an optical layer of a flexible display apparatus. For some embodiments, the example process may further include controlling (2104) a light emitting layer comprising a plurality of individually controllable light emitting elements to display image content according to the state of bending of the optical layer detected. For some embodiments, an apparatus with a processor and a non-transitory computer-readable medium storing instructions that are operative, when executed by the processor, may perform the example method or any method described above. Some embodiments may include a sensor, such as an optical sensor, to detect the degree or state of bending of the optical layer of a flexible display apparatus.

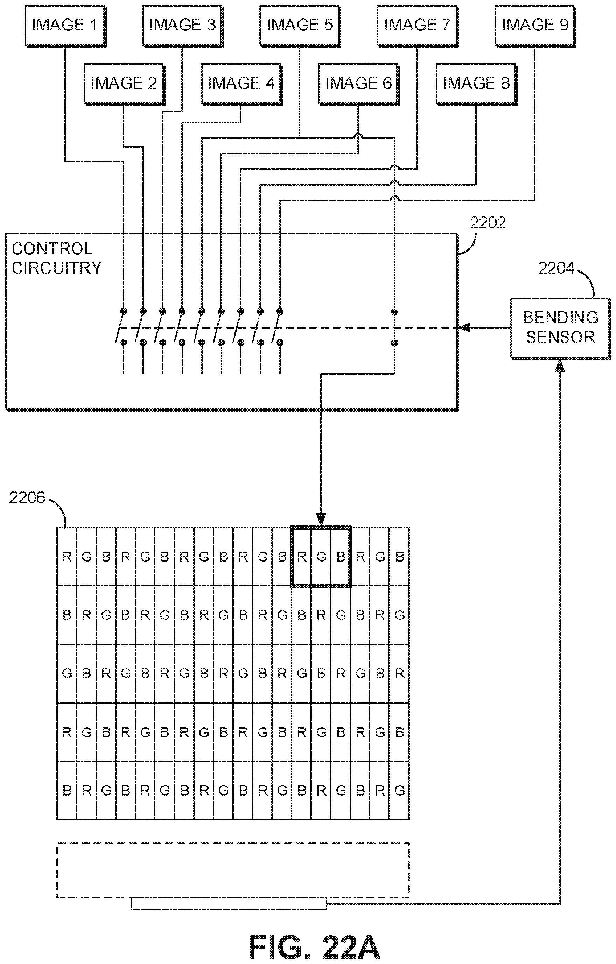

FIGs. 22A-22C schematically illustrate the operation of control circuitry according to some embodiments. As illustrated in FIGs. 22A-22C, a plurality of images (e.g., images 1 through 9) are available, each of which represents a view of a 3D scene. Control circuitry 2202 controls the display of one or more of the images based on input from a bending sensor 2204. Although the operation of the control circuitry is illustrated using conventional symbols for mechanical switches, this is merely done to aid understanding; various embodiments may use software and/or solid-state technology to implement the control circuitry. The bending sensor may be implemented as, for example, a magnetic sensor, a fiber optic bending sensor, a piezoelectric sensor, or using other technologies.

In the configuration of FIG. 22A, the bending sensor 2204 detects that the display is in a substantially flat configuration. In response, the control circuitry 2202 operates the display 2206 in a 2D mode. The control circuitry may do this by providing a single image (in this example, image 5) to the display.

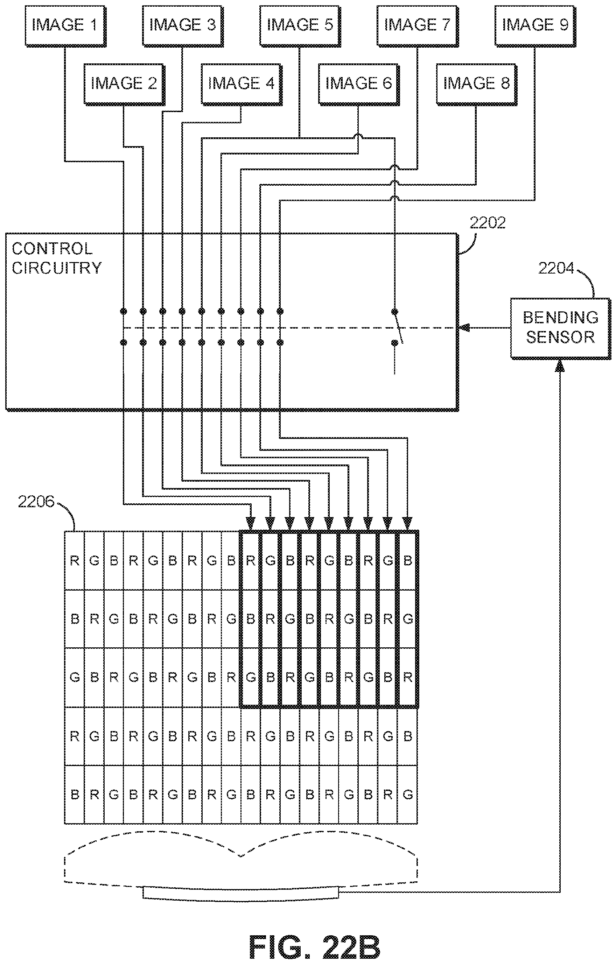

In the configuration of FIG. 22B, the bending sensor 2204 detects that the display is in a curved configuration. In response, the control circuitry 2202 operates the display 2206 in a 3D mode. The control circuitry may do this by providing several (or all) of the available images to the display. As seen in FIGs. 22A and 22B and explained in greater detail with respect to FIGs. 12A-12B and 13A-13B, the layout of RGB display pixels may be different in the 2D versus the 3D configuration. It may be the case that fewer pixels of each image can be displayed in the 3D configuration as compared to the 2D configuration. To account for this, in some embodiments, the control circuitry 2202 may upscale or downscale one or more of the provided images to accommodate the number of displayable pixels in the current configuration.

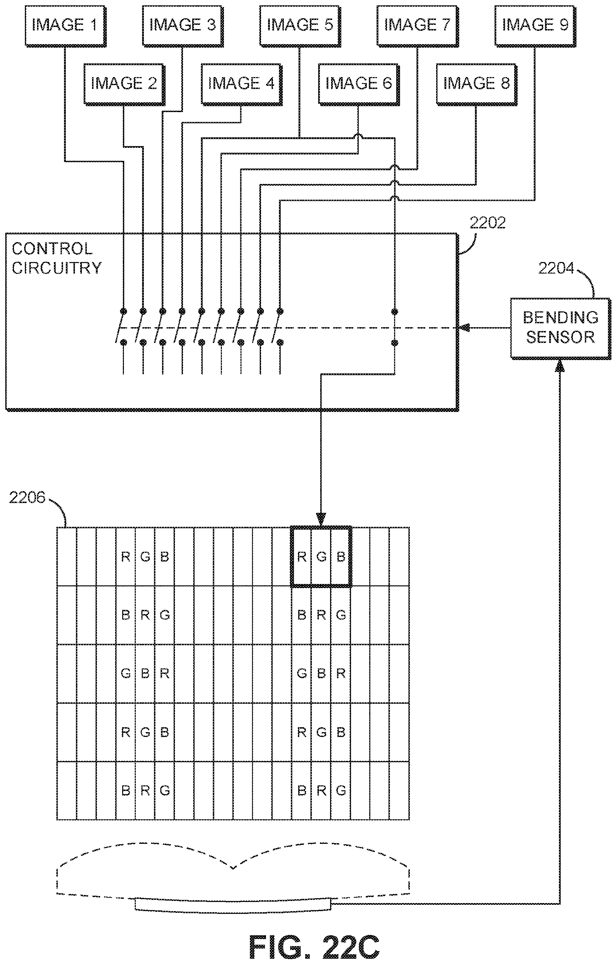

In some embodiments, the control circuitry is operable in a privacy mode. FIG. 22C illustrates one implementation of a privacy mode, in which the display is in a curved configuration but a 2D image is displayed. In such a mode, the image may be displayed using only pixels that are nearer to the optical axis of each cylindrical lens. Other pixels, whose light may otherwise be visible to undesired viewers, may be disabled. A power saving mode may be operated analogously to the privacy mode, using fewer pixels while light is concentrated toward a central viewing position.

In some embodiments, the display configuration may be selected through user input. Some such embodiments may operate without the use of a bending sensor. User input may also be used to override a mode selected with the use of a sensor. When the display is in a curved configuration, user input may be used to determine whether a privacy mode or a 3D mode is selected. In some embodiments, the same levels of curvature are used for a 3D mode and a privacy mode. In other embodiments, different levels of curvature are used for a 3D mode and a privacy mode. For example, a slight curvature may be sufficient impart an optical power to the lenticular array that is sufficient to prevent most undesired viewing of the display. A greater level of curvature may be desirable to impart an optical power to the lenticular array that is sufficient to prevent excessive overlap between angularly separated views. Below a first threshold level of curvature, the display may be operated in a 2D mode. Between the first threshold level of curvature and a second threshold level of curvature, the display may be operated in a privacy mode. At or above the second level of curvature, the display may be operated in a 3D mode.

An apparatus according to some embodiments includes: a mechanical layer with flexible joints; a flexible display emitter layer; and a flexible transparent layer with optical properties that vary when flexed. Some such embodiments further include subpixels which alternate color in both horizontal and vertical spatial directions.

A method according to some embodiments includes: sensing a degree of bending of a flexible display; selecting a display mode based on the degree of bending; rendering image content based on the selected display mode; and displaying the rendered image content on the flexible display.

In some embodiments, the degree of bending is limited to one plane.

In some embodiments, selecting the display mode comprises selecting the display mode from a group comprising at least a wide viewing angle mode and a limited viewing angle mode.

In some embodiments, selecting the display mode comprises selecting the display mode from a group comprising at least a wide viewing angle mode and a multi-view three-dimensional (3D) mode.

An apparatus according to some embodiments includes: a light emitting layer comprising individually-controllable light emitting elements; a deformable optical layer configurable by a user into at least a first state of deformation and a second state of deformation, the optical layer having different optical properties in the first state of deformation compared to the second state of deformation; and control circuitry configured to control the light emitting elements to display imagery to the user, the apparatus configured to display two-dimensional (2D) imagery when the optical layer is configured to the first state of deformation, and the apparatus configured to display three-dimensional (3D) imagery when the optical layer is configured to the second state of deformation.

In some embodiments, the optical layer is flexible, and in the first state of deformation, the optical layer is configured into a substantially-planar shape, and in the second state of deformation, the optical layer is configured into a curved shape.

In some embodiments, the optical layer is stretchable, and in the first state of deformation, the optical layer is stretched, and in the second state of deformation, the optical layer is relaxed compared to when in the first state of deformation.

In some embodiments, the optical layer is compressible, in the first state of deformation, the optical layer is compressed, and in the second state of deformation, the optical layer is relaxed compared to when in the first state of deformation.

In some embodiments, when in the first state of deformation, the optical layer comprises a substantially flat surface. In some embodiments, when in the second state of deformation, the optical layer comprises a lenticular lens array configured for displaying 3D imagery.

In some embodiments, the optical layer is configured by bending the apparatus. In some embodiments, the optical layer is configured by selecting between 2D and 3D display modes in a user interface.

Some embodiments further include: a sensor, wherein the sensor is used for a determination of whether the optical layer is configured into the first state of deformation or the second state of deformation, and wherein the apparatus is configured to display either the 2D imagery or the 3D imagery based on the determination.

In some embodiments, the optical layer comprises a plurality of sections of flexible optical material, each of the plurality of sections separated by non-flexible baffle material.

In some embodiments, the light emitting layer is deformable, and the light emitting layer is configured to be deformed synchronously with the optical layer.

A method according to some embodiments includes: detecting a state of bending of an optical layer of a flexible display apparatus; and controlling a light emitting layer comprising a plurality of individually-controllable light emitting elements to display image content according to the state of bending of the optical layer detected.

Detecting the state of bending of the optical layer may include detecting a degree of bending of the optical layer.

In some embodiments, the optical layer is configurable into at least a first state of deformation and a second state of deformation. The first state of deformation may be associated with a two-dimensional image mode, and the second state of deformation may be associated with a three-dimensional image mode.

In some embodiments, the first state of deformation is associated with a first degree of bending of the optical layer, and the second state of deformation is associated with a second degree of bending of the optical layer, wherein the second degree of bending is greater than the first degree of bending.

In some embodiments, when the optical layer is in the first state of deformation, the optical layer is in a substantially planar shape, and when the optical layer is in the second state of deformation, the optical layer is in a curved shape.

In some embodiments, when the optical layer is in the first state of deformation, the optical layer is stretched, and when the optical layer is in the second state of deformation, the optical layer is relaxed compared to when in the first state of deformation.

In some embodiments, when the optical layer is in the first state of deformation, the optical layer is compressed, and when the optical layer is in the second state of deformation, the optical layer is relaxed compared to when in the first state of deformation.

Some embodiments further include: receiving a display mode selection; and configuring the optical layer according to the display mode selection.

In some embodiments, the display mode selection is selected from the group consisting of a 2D display mode and a 3D display mode.

Some embodiments further comprise configuring the optical layer according to the state of bending of the optical layer detected.

In some embodiments, the method further comprises: detecting a state of bending of the light emitting layer of the flexible display apparatus, wherein controlling the light emitting layer comprises displaying image content according to the state of bending of the light emitting layer.

A display device according to some embodiments includes: a light-emitting layer comprising an addressable array of light-emitting elements; a flexible optical layer overlaying the light-emitting layer, the flexible optical layer having a plurality of lens regions, wherein the flexible optical layer is configured such that optical powers of the lens regions change in response to changing levels of tensile or compressive force on the flexible optical layer.

In some embodiments, under a first amount of tensile or compressive force on the optical layer, the optical powers of the lens regions are substantially zero.

In some embodiments, under a second amount of tensile or compressive force on the optical layer, the lens regions are configured as a lenticular array, each lens region corresponding to a cylindrical lens within the lenticular array. In some embodiments, under the second amount of tensile or compressive force on the optical layer, the cylindrical lens regions are operative to substantially collimate light from the light-emitting layer along a horizontal direction.

In some embodiments, the lens regions are separated by substantially rigid baffles.

In some embodiments, the display device is configured to be bendable in at least one plane of principle curvature, and the device is configured such that the tensile or compressive force on the optical layer changes based on the amount of bending.

In some embodiments, the display device further comprises a sensor for determining the amount of bending.

In some embodiments, the display device further comprises control circuitry for controlling the display of light by the light-emitting layer, the control circuitry being operable to select a display mode based on the amount of bending.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A display device (2206) comprising:
a bendable light-emitting layer (1506) comprising an addressable array of light-emitting elements (1502, 1504); and
a deformable optical layer (1506) having a plurality of lens regions, the deformable optical layer (1508) overlaying the light-emitting layer and being bendable along with the light-emitting layer (1506), wherein the deformable optical layer (1506) is configured such that optical powers of the lens regions change in response to bending of the optical layer (1506);
the display device being **characterized by**:
a sensor (2204) operative to determine a degree of bending of at least one of the deformable optical layer (1508) and the light-emitting layer (1506); and
control circuitry (2202) operative to select a 2D display mode or a 3D display mode based the degree of bending and to control the light-emitting elements to display a 2D image or a 3D image according to the selected display mode.

2. The display device (2206) of claim 1, wherein the deformable optical layer (1506) is configured such that, while the deformable optical layer (1506) is in at least a first curved configuration, the lens regions form a lenticular array of cylindrical lenses.

3. The display device (2206) of any one of the preceding claims, wherein the deformable optical layer (1506) is configured such that, while the deformable optical layer (1506) is substantially flat, the optical powers of the lens regions are substantially zero.

4. The display device (2206) of any one of the preceding claims, further comprising a plurality of baffles (1512) provided between adjacent lens regions, wherein the baffles (1512) are more rigid than the deformable optical layer (1506).

5. The display device (2206) of claim 4, wherein the baffles (1512) are transparent.

6. The display device (2206) of claim 1, wherein the control circuitry (2202) is operative to display an image in a privacy mode having a limited field of view while the display device (2206) has a degree of bending between a first threshold level of curvature and a second threshold level of curvature.

7. A method of operating a display device (2206) comprising:
operating a bending sensor (2204) to determine a degree of bending of the display device (2206), wherein the display device (2206) includes a deformable optical layer (1506) having a plurality of lens regions, the deformable optical layer (1506) being configured such that optical powers of the lens regions change in response to bending of the optical layer;
selecting a display mode based on the degree of bending, wherein the selection is made from among a group of display modes including at least a 2D display mode and a 3D display mode; and
operating the display device (2206) according to the selected display mode.

8. The method of claim 7, wherein selecting a display mode comprises selecting the 2D display mode in response to a determination that the display device (2206) is in a substantially flat configuration.

9. The method of claim 7, wherein selecting a display mode comprises selecting the 3D display mode in response to a determination that the display device (2206) is in a first curved configuration.

10. The method of claim 9, wherein the group of display modes further includes a privacy mode having a limited field of view, and wherein selecting a display mode comprises selecting the privacy mode in response to a determination that the display device (2206) is in a second curved configuration having a lower degree of bending than the first curved configuration.

11. The method of any one of claims 7-10, wherein the 2D display mode is selected when the degree of bending is below a first threshold level of curvature.

12. The method of any one of claims 7-11, wherein the 3D display mode is selected when the degree of bending is at or above a second threshold level of curvature.

13. The method of claim 7, wherein the display device (2206) further comprises a plurality of baffles (1512) provided between adjacent lens regions, wherein the baffles (1512) are more rigid than the deformable optical layer (1506).

14. The method of claim 13, wherein the baffles (1512) are transparent.

## Patentansprüche

1. Anzeigevorrichtung (2206), die umfasst:
eine biegbare lichtemittierende Schicht (1506), die eine adressierbare Anordnung lichtemittierender Elemente (1502, 1504) umfasst; und
eine verformbare optische Schicht (1506) mit mehreren Linsengebieten, wobei die verformbare optische Schicht (1508) über der lichtemittierenden Schicht liegt und zusammen mit der lichtemittierenden Schicht (1506) biegbar ist, wobei die verformbare optische Schicht (1506) so konfiguriert ist, dass sich die Brechwerte der Linsengebiete als Reaktion auf das Biegen der optischen Schicht (1506) ändern;
wobei die Anzeigevorrichtung **gekennzeichnet ist durch**:
einen Sensor (2204), der dafür betreibbar ist, einen Grad der Biegung der verformbaren optischen Schicht (1508) und/oder der lichtemittierenden Schicht (1506) zu bestimmen; und
eine Steuerschaltungsanordnung (2202), die zum Auswählen einer 2D-Anzeigebetriebsart oder einer 3D-Anzeigebetriebsart auf der Grundlage des Grads der Biegung und zum Steuern der lichtemittierenden Elemente zum Anzeigen eines 2D-Bilds und eines 3D-Bilds in Übereinstimmung mit der ausgewählten Anzeigebetriebsart betreibbar ist.

2. Anzeigevorrichtung (2206) nach Anspruch 1, wobei die verformbare optische Schicht (1506) so konfiguriert ist, dass die Linsengebiete eine Linsenanordnung von Zylinderlinsen bilden, während die verformbare optische Schicht (1506) in mindestens einer ersten gekrümmten Konfiguration ist.

3. Anzeigevorrichtung (2206) nach einem der vorhergehenden Ansprüche, wobei die verformbare optische Schicht (1506) so konfiguriert ist, dass die Brechwerte der Linsengebiete im Wesentlichen null sind, während die verformbare optische Schicht (1506) im Wesentlichen flach ist.

4. Anzeigevorrichtung (2206) nach einem der vorhergehenden Ansprüche, die ferner mehrere Streulichtblenden (1512) umfasst, die zwischen angrenzenden Linsengebieten vorgesehen sind, wobei die Streulichtblenden (1512) starrer als die verformbare optische Schicht (1506) sind.

5. Anzeigevorrichtung (2206) nach Anspruch 4, wobei die Streulichtblenden (1512) transparent sind.

6. Anzeigevorrichtung (2206) nach Anspruch 1, wobei die Steuerschaltungsanordnung (2202) dafür betreibbar ist, ein Bild in einer Privatsphärebetriebsart mit einem begrenzten Blickfeld anzuzeigen, während die Anzeigevorrichtung (2206) einen Grad der Biegung zwischen einem ersten Schwellenkrümmungsniveau und einem zweiten Schwellenkrümmungsniveau aufweist.

7. Verfahren zum Betreiben einer Anzeigevorrichtung (2206), wobei das Verfahren umfasst:
Betreiben eines Biegesensors (2204) zum Bestimmen eines Grads der Biegung der Anzeigevorrichtung (2206),
wobei die Anzeigevorrichtung (2206) eine verformbare optische Schicht (1506) mit mehreren Linsengebieten enthält, wobei die verformbare optische Schicht (1506) so konfiguriert ist, dass sich die Brechwerte der Linsengebiete als Reaktion auf das Biegen der optischen Schicht ändern;
Auswählen einer Anzeigebetriebsart auf der Grundlage des Grads der Biegung, wobei die Auswahl aus einer Gruppe von Anzeigebetriebsarten, die mindestens eine 2D-Anzeigebetriebsart und eine 3D-Anzeigebetriebsart enthält, getroffen wird; und
Betreiben der Anzeigevorrichtung (2206) in Übereinstimmung mit der ausgewählten Anzeigebetriebsart.

8. Verfahren nach Anspruch 7, wobei das Auswählen einer Anzeigebetriebsart das Auswählen der 2D-Anzeigebetriebsart als Reaktion auf eine Bestimmung, dass die Anzeigevorrichtung (2206) in einer im Wesentlichen flachen Konfiguration ist, umfasst.

9. Verfahren nach Anspruch 7, wobei das Auswählen einer Anzeigebetriebsart das Auswählen der 3D-Anzeigebetriebsart als Reaktion auf eine Bestimmung, dass die Anzeigevorrichtung (2206) in einer ersten gekrümmten Konfiguration ist, umfasst.

10. Verfahren nach Anspruch 9, wobei die Gruppe der Anzeigebetriebsarten ferner eine Privatsphärebetriebsart mit einem begrenzten Blickfeld enthält, und wobei das Auswählen einer Anzeigebetriebsart das Auswählen der Privatsphärebetriebsart als Reaktion auf eine Bestimmung, dass die Anzeigevorrichtung (2206) in einer zweiten gekrümmten Konfiguration mit einem niedrigeren Grad der Biegung als in der ersten gekrümmten Konfiguration ist, umfasst.

11. Verfahren nach einem der Ansprüche 7-10, wobei die 2D-Anzeigebetriebsart ausgewählt wird, wenn der Grad der Biegung unter einem ersten Schwellenkrümmungsniveau liegt.

12. Verfahren nach einem der Ansprüche 7-11, wobei die 3D-Anzeigebetriebsart ausgewählt wird, wenn der Grad der Biegung bei oder über einem zweiten Schwellenkrümmungsniveau liegt.

13. Verfahren nach Anspruch 7, wobei die Anzeigevorrichtung (2206) ferner mehrere Streulichtblenden (1512) umfasst, die zwischen angrenzenden Linsengebieten vorgesehen sind, wobei die Streulichtblenden (1512) starrer als die verformbare optische Schicht (1506) sind.

14. Verfahren nach Anspruch 13, wobei die Streulichtblenden (1512) transparent sind.

## Revendications

1. Dispositif d'affichage (2206) comprenant :
une couche électroluminescente flexible (1506) comprenant un réseau adressable d'éléments électroluminescents (1502, 1504) ; et
une couche optique déformable (1506) ayant une pluralité de régions de lentilles, la couche optique déformable (1508) recouvrant la couche électroluminescente et étant flexible comme la couche électroluminescente (1506), où la couche optique déformable (1506) est configurée de sorte que les puissances optiques des régions de lentilles changent en réponse à la flexion de la couche optique (1506) ;
le dispositif d'affichage étant **caractérisé par** :
un capteur (2204) servant à déterminer le degré de flexion d'au moins l'une de la couche optique déformable (1508) et de la couche électroluminescente (1506) ; et
un ensemble de circuits de commande (2202) servant à sélectionner un mode d'affichage 2D ou un mode d'affichage 3D en fonction du degré de flexion et à commander les éléments électroluminescents pour afficher une image 2D ou une image 3D en fonction du mode d'affichage sélectionné.

2. Dispositif d'affichage (2206) selon la revendication 1, dans lequel la couche optique déformable (1506) est configurée de sorte que, lorsque la couche optique déformable (1506) est dans au moins une première configuration courbée, les régions de lentilles forment un réseau lenticulaire de lentilles cylindriques.

3. Dispositif d'affichage (2206) selon l'une quelconque des revendications précédentes, dans lequel la couche optique déformable (1506) est configurée de sorte que, lorsque la couche optique déformable (1506) est substantiellement plate, les puissances optiques des régions de lentilles sont substantiellement nulles.

4. Dispositif d'affichage (2206) selon l'une quelconque des revendications précédentes, comprenant en outre une pluralité de déflecteurs (1512) placés entre des régions de lentilles adjacentes, où les déflecteurs (1512) sont plus rigides que la couche optique déformable (1506).

5. Dispositif d'affichage (2206) selon la revendication 4, dans lequel les déflecteurs (1512) sont transparents.

6. Dispositif d'affichage (2206) selon la revendication 1, dans lequel l'ensemble de circuits de commande (2202) sert à afficher une image dans un mode de confidentialité ayant un champ de vision limité lorsque le dispositif d'affichage (2206) présente un degré de flexion entre un premier niveau de seuil de courbure et un deuxième niveau de seuil de courbure.

7. Procédé de fonctionnement d'un dispositif d'affichage (2206) comprenant :
l'utilisation d'un capteur de flexion (2204) pour déterminer un degré de flexion du dispositif d'affichage (2206), où le dispositif d'affichage (2206) comprend une couche optique déformable (1506) ayant une pluralité de régions de lentilles, la couche optique déformable (1506) étant configurée de sorte que les puissances optiques des régions de lentilles changent en réponse à la flexion de la couche optique ;
la sélection d'un mode d'affichage en fonction du degré de flexion, où la sélection est effectuée parmi un groupe de modes d'affichage comprenant au moins un mode d'affichage 2D et un mode d'affichage 3D ; et
l'utilisation du dispositif d'affichage (2206) en fonction du mode d'affichage sélectionné.

8. Procédé selon la revendication 7, dans lequel la sélection d'un mode d'affichage comprend la sélection du mode d'affichage 2D en réponse à une détermination selon laquelle le dispositif d'affichage (2206) est dans une configuration substantiellement plate.

9. Procédé selon la revendication 7, dans lequel la sélection d'un mode d'affichage comprend la sélection du mode d'affichage 3D en réponse à une détermination selon laquelle le dispositif d'affichage (2206) est dans une première configuration courbée.

10. Procédé selon la revendication 9, dans lequel le groupe de modes d'affichage comprend en outre un mode de confidentialité ayant un champ de vision limité, et dans lequel la sélection d'un mode d'affichage comprend la sélection du mode de confidentialité en réponse à une détermination selon laquelle le dispositif d'affichage (2206) est dans une deuxième configuration courbée ayant un degré de flexion inférieur à la première configuration courbée.

11. Procédé selon l'une quelconque des revendications 7 à 10, dans lequel le mode d'affichage 2D est sélectionné lorsque le degré de flexion est inférieur à un premier niveau de seuil de courbure.

12. Procédé selon l'une quelconque des revendications 7 à 11, dans lequel le mode d'affichage 3D est sélectionné lorsque le degré de flexion est supérieur ou égal à un deuxième niveau de seuil de courbure.

13. Procédé selon la revendication 7, dans lequel le dispositif d'affichage (2206) comprend en outre une pluralité de déflecteurs (1512) placées entre des régions de lentilles adjacentes, où les déflecteurs (1512) sont plus rigides que la couche optique déformable (1506).

14. Procédé selon la revendication 13, dans lequel les déflecteurs (1512) sont transparents.
